(19) **Europäisches Patentamt / European Patent Office / Office européen des brevets**

(11) **EP 4 005 887 A1**

(12) **EUROPEAN PATENT APPLICATION**

(43) Date of publication:
**01.06.2022 Bulletin 2022/22**

(21) Application number: **21204771.6**

(22) Date of filing: **26.10.2021**

(51) International Patent Classification (IPC):
**B60W 10/06** (2006.01)    **B60W 10/08** (2006.01)
**B60W 20/12** (2016.01)    **B60W 20/13** (2016.01)
**B60W 10/26** (2006.01)    **B60W 60/00** (2020.01)

(52) Cooperative Patent Classification (CPC):
**B60W 10/06; B60W 10/08; B60W 10/26;
B60W 20/12; B60W 20/13; B60W 60/0011;**
B60W 2510/244; B60W 2556/50

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.11.2020 JP 2020196183**

(71) Applicant: **TOYOTA JIDOSHA KABUSHIKI KAISHA**
**Toyota-shi, Aichi-ken 471-8571 (JP)**

(72) Inventors:
• **YOKOYAMA, Daiki**
  **Toyota-shi, 471-8571 (JP)**

• **CHIBA, Hiroya**
  **Toyota-shi, 471-8571 (JP)**
• **KAGEURA, Yoshiyuki**
  **Toyota-shi, 471-8571 (JP)**
• **SHIMADA, Masanori**
  **Toyota-shi, 471-8571 (JP)**
• **SAKAYANAGI, Yoshihiro**
  **Toyota-shi, 471-8571 (JP)**
• **KURIHASHI, Sui**
  **Toyota-shi, 471-8571 (JP)**
• **MORITA, Hiroki**
  **Toyota-shi, 471-8571 (JP)**
• **OGISO, Makoto**
  **Toyota-shi, 471-8571 (JP)**

(74) Representative: **D Young & Co LLP**
**120 Holborn**
**London EC1N 2DY (GB)**

(54)    **VEHICLE CONTROL DEVICE**

(57)    In a hybrid vehicle, when a host vehicle is predicted to enter the inside of an engine drive restricted zone where operation of an internal combustion engine (20) is restricted, it is judged if congestion occurs or congestion is predicted as occurring in at least one of a running route leading to the inside of the engine drive restricted zone and a running route at the inside of the engine drive restricted zone. When it is judged that congestion occurs or congestion is predicted as occurring in at least one of a running route leading to the inside of the engine drive restricted zone and a running route at the inside of the engine drive restricted zone, an SOC amount of a battery (3) when the host vehicle enters the inside of the engine drive restricted zone is made to increase compared to when it is judged that congestion does not occur or congestion is predicted as not occurring at both of a running route leading to the inside of the engine drive restricted zone and a running route at the inside of the engine drive restricted zone.

FIG. 1

**Description**

FIELD

The present invention relates to a vehicle control device.

BACKGROUND

Known in the art is a hybrid vehicle provided with an internal combustion engine for power generation use or drive use, a battery charged by a power generating action of a generator driven by the internal combustion engine or regenerative control, and an electric motor driven by the battery, in which hybrid vehicle, when the vehicle passes through the inside of a region with reinforced air pollution prevention controls, the operation of the internal combustion engine is stopped and the electric motor is used to drive the vehicle (for example, see Japanese Unexamined Patent Publication No. 7-75210). In this hybrid vehicle, if the state of charge of the battery falls to a lower limit value, the battery is charged by the power generation action of the generator driven by the internal combustion engine, and the lower limit value of the state of charge of the battery is set slightly higher so that the state of charge of the battery will not become insufficient while the vehicle is passing through the inside of a region with reinforced air pollution prevention controls.

SUMMARY

However, even if the lower limit value of the state of charge of the battery is set slightly higher in this way, for example, if traffic congestion occurs when the vehicle is running through the inside of a region with reinforced air pollution prevention controls, the state of charge of the battery is liable to fall, that is, the SOC (state of charge) amount showing the state of charge of the battery is liable to fall, and a situation is liable to arise where the vehicle can no longer be driven by the electric motor. However. the above-mentioned patent literature does not suggest in any way a method for avoiding occurrence of such a situation.

The present invention provides a vehicle control device able to avoid occurrence of such a situation.

According to the present invention, there is provided a vehicle control device of a hybrid vehicle driven by only an electric motor or by both of an electric motor and an internal combustion engine, wherein a boundary is set between an inside of an engine drive restricted zone where operation of the internal combustion engine is restricted and an outside of the engine drive restricted zone, said vehicle control device comprising:

> a navigation device searching for a running route up to a destination when a destination is input,
> a congestion information receiving device receiving congestion information,
> an SOC amount acquiring unit acquiring an SOC amount of a battery serving as a source of supply of electric power to the electric motor,
> an information acquiring unit acquiring position information of a host vehicle and information relating to the boundary,
> a judging unit judging if congestion occurs or if congestion is predicted as occurring in at least one of a running route leading to the inside of the engine drive restricted zone and a running route at the inside of the engine drive restricted zone based on running routes found by the navigation device and the congestion information when it is judged based on the information acquired by the information acquiring unit that the host vehicle is positioned at the outside of the engine drive restricted zone and when it is predicted based on search results by the navigation device that the host vehicle will enter the inside of the engine drive restricted zone, and
> an SOC amount control unit making an SOC amount when the host vehicle enters inside of the engine drive restricted zone increase when it is judged by the judging unit that congestion occurs or if congestion is predicted as occurring in at least one of a running route leading to the inside of the engine drive restricted zone and a running route at the inside of the engine drive restricted zone compared with when it is judged that congestion does not occur or if congestion is predicted as not occurring in both a running route leading to the inside of the engine drive restricted zone and a running route at the inside of the engine drive restricted zone.

It is possible to control the operation of the vehicle so that the vehicle no longer becomes unable to run inside of an engine drive restricted zone.

BRIEF DESCRIPTION OF DRAWINGS

FIG. 1 is a view showing a vehicle and server shown schematically.

FIG. 2A and FIG. 2B are views of the configuration of a vehicle drive unit.
FIG. 3 is a view for explaining an SOC amount.
FIG. 4 is a flow chart for performing charging control.
FIG. 5 is a view schematically showing a road map.
FIG. 6 is a view of the functional configuration of a vehicle control device according to the present invention.
FIG. 7 is a view for conceptually explaining an embodiment according to the present invention.
FIG. 8 is a view showing an SOC amount.
FIG. 9 is a flow chart for performing vehicle control.
FIG. 10 is a flow chart for performing vehicle control.
FIG. 11 is a flow chart determining a lower limit value SOCX of the SOC amount in a first embodiment.
FIG. 12 is a flow chart determining a lower limit value SOCX of the SOC amount in a second embodiment.
FIG. 13 is a flow chart determining a lower limit value SOCX of the SOC amount in a third embodiment.
FIG. 14 is a flow chart determining a lower limit value SOCX of the SOC amount in a fourth embodiment.
FIG. 15 is a flow chart determining a lower limit value SOCX of the SOC amount in a fifth embodiment.

DESCRIPTION OF EMBODIMENTS

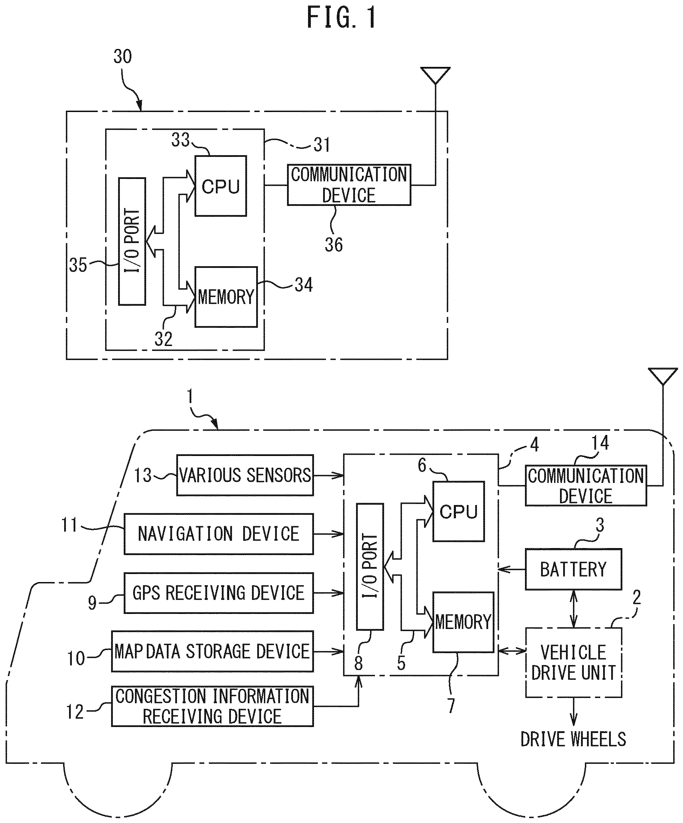

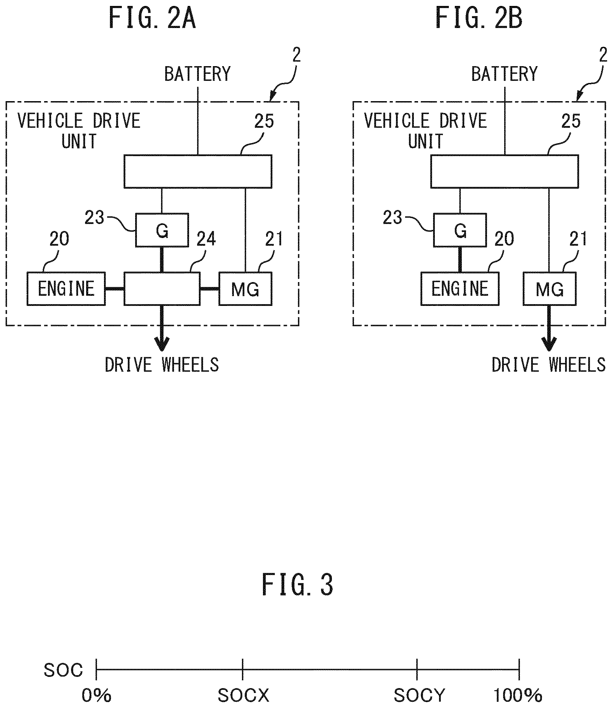

Referring to FIG. 1, 1 indicates a hybrid vehicle driven by only an electric motor or by both of an electric motor and an internal combustion engine. Further, in FIG. 1, 2 indicates a vehicle drive unit for imparting drive power to drive wheels, 3 indicates a battery, and 4 indicates an electronic control unit mounted in the vehicle 1. As shown in FIG. 1, the electronic control unit 4 is comprised of a digital computer provided with a CPU (microprocessor) 6, a memory 7 comprised of a ROM and RAM, and an input/output port 8, which are connected with each other by a bidirectional bus 5.

Further, inside of the vehicle 1, a GPS (global positioning system) receiving device 9 for receiving radio waves from artificial satellites to detect the current position of the vehicle 1, a map data storage device 10 storing map data etc., a navigation device 11 searching for a running route to a destination if inputting a destination, and a congestion information receiving device 12 receiving congestion information distributed, for example, by a traffic information center are mounted. Furthermore, inside of the vehicle 1, an accelerator opening degree sensor, engine rotational speed sensor, vehicle speed sensor, atmospheric temperature sensor, atmospheric pressure sensor, and other various sensors 13 are mounted. These GPS receiving device 9, map data storage device 10, navigation device 11, congestion information receiving device 12, and various sensors 13 are connected to the electronic control unit 4.

On the other hand, in FIG. 1, 30 indicates a server. As shown in FIG. 1, inside of this server 30, an electronic control unit 31 is set. This electronic control unit 31 is comprised of a digital computer provided with a CPU (microprocessor) 33, a memory 34 comprised of a ROM and RAM, and an input/output port 35, which are connected with each other by a bidirectional bus 32. Furthermore, inside of the server 30, a communication device 36 for communicating with the vehicle 1 is set. On the other hand, in the vehicle 1, a communication device 14 for communicating with the server 30 is mounted.

FIG. 2A and FIG. 2B show respectively different types of hybrid systems in the view of the configuration of the vehicle drive unit 2 in FIG. 1. These hybrid systems are well known, so will be explained very simply. First, referring to FIG. 2A, the vehicle drive unit 2 is provided with an internal combustion engine 20, an electric motor 21, a generator 23, a power split mechanism 24 comprised of for example a planetary gear mechanism, and a motor control device 25. The electric motor 21 acts as a generator, so usually is called a "motor-generator". For example, at the time of low speed running, the vehicle 1 is driven by the electric motor 21. At this time, electric power is supplied from the battery 3 through the motor control device 25 to the electric motor 12, and the output of the electric motor 21 is transmitted by the power split mechanism 24 to the drive wheels.

On the other hand, at the time of medium and high speed running, the vehicle 1 is driven by the internal combustion engine 20 and electric motor 21. At this time, on one hand, part of the output of the internal combustion engine 20 is transmitted by the power split mechanism 24 to the drive wheels, while, on the other hand, the generator 23 is driven by part of the output of the internal combustion engine 20, the electric motor 21 is driven by the generated electric power of the generator 23, and the output of the electric motor 21 is transmitted by the power split mechanism 24 to the drive wheels. Further, at the time of braking the vehicle 1, the electric motor 21 functions as a generator, and the regenerative control in which the battery 3 is charged by the generated electric power of the electric motor 21 is performed. Further, when the state of charge of the battery 3 has fallen, the generator 23 is driven by the internal combustion engine 20 through the power split mechanism 24, and the battery 3 is charged by the generated electric power of the generator 23.

Next, referring to FIG. 2B, the vehicle drive unit 2 is provided with an internal combustion engine 20, an electric motor 21, a generator 23, and a motor control device 25. In the hybrid system shown in FIG. 2B as well, the electric motor 21 acts as a generator as well, so usually is called a "motor-generator". In this hybrid system, the vehicle 1 is continuously driven by the electric motor 21. On the other hand, if the state of charge of the battery 3 falls, the generator 23 is driven by the internal combustion engine 20, and the battery 3 is charged by the generated electric power of the generator 23. Further, in this hybrid system as well, at the time of braking the vehicle 1, the electric motor 21 functions as a generator, and the regenerative control in which the battery 3 is charged by the generated electric power of the electric motor 21 is performed. In the hybrid system shown in either of FIG. 2A and FIG. 2B as well, the internal combustion engine 20 and power split mechanism 24 are controlled by output signals of the electronic control unit 4, while the electric motor 21 and the generator 23 are controlled by the motor control device 25 based on output signals of the electronic control unit 4.

In this regard, if referring to the mode where only the electric motor 21 is used for driving the vehicle 1 as the "EV mode" and referring to the mode where both of the internal combustion engine 20 and electric motor 21 are used for driving the vehicle 1 as the "HV mode", in the hybrid vehicle 1 provided with the hybrid system shown in FIG. 2A, the vehicle is selectively switched to either mode of the EV mode and the HV mode. On the other hand, in the hybrid vehicle 1 provided with the hybrid system shown in FIG. 2B, only the electric motor 21 is used for driving the vehicle 1, and the internal combustion engine 20 is used for driving the generator 23 and charging the battery 3. Therefore, in this vehicle 1, the drive mode of the vehicle 1 is always made the EV mode. Note that, the hybrid systems shown in FIG. 2A and FIG. 2B are representative examples. In the present invention, various types of hybrid systems can be used. Note that, below, the case of using the hybrid system shown in FIG. 2A will be focused on to explain the present invention.

FIG. 3 shows an SOC (state of charge) amount expressing the state of charge of the battery 3. In FIG. 3, when the state of charge of the battery 3 is a full charge, the SOC amount becomes 100%, while when the state of charge of the battery 3 is zero, the SOC amount becomes 0%. Further, in the hybrid systems shown in FIG. 2A and FIG. 2B, for example, if the SOC amount falls to a set lower limit value SOCX, until the SOC amount rises to a preset upper limit value SOCY, the generator 23 is driven by the internal combustion engine 20 and the charging action of the battery 3 is performed by the generated electric power of the generator 23. Note that, below, sometimes this SOC amount will be simply expressed as "SOC". Note that, the amount of current outflow/inflow from and to the battery 3 and the output voltage of the battery 3 are constantly being detected, while the SOC amount is calculated inside the electronic control unit 4 based on the detected amount of current outflow/inflow from and to the battery 3 etc.

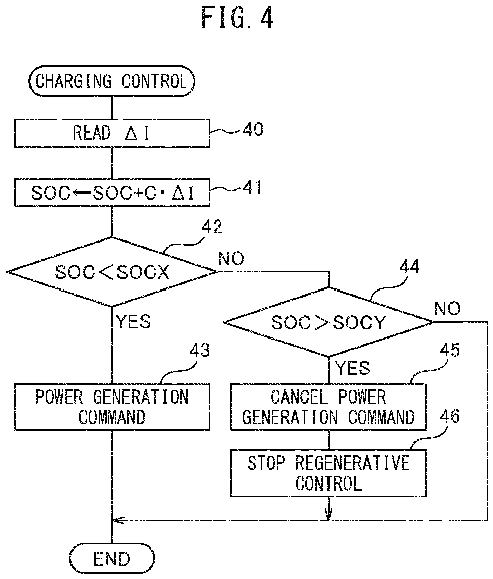

FIG. 4 shows a charging control routine of the battery 3 performed at the electronic control unit 4. This charging control routine is performed by interruption every fixed time period.

Referring to FIG. 4, first, at step 40, the amount of current inflow $\Delta I$ to the battery 3 in the fixed time period is read. Next, at step 41, the product of the amount of current inflow $\Delta I$ to the battery 3 in the fixed time period and a constant C is added to the SOC amount SOC. Note that, when current flows out from the battery 3, the amount of current inflow $\Delta I$ becomes a minus value. Note that, this method of calculation of the SOC amount SOC just shows an extremely simple example. Various known methods of calculation of the SOC amount SOC can be used.

Next, at step 42, it is judged if the SOC amount SOC falls below a set lower limit value SOCX. When it is judged that the SOC amount SOC falls below the set lower limit value SOCX, the routine proceeds to step 43 where a power generation command is issued. If the power generation command is issued, the generator 23 is driven by the internal combustion engine 20, and the charging action of the battery 3 is performed by the generated electric power of the generator 23. On the other hand, when at step 42 it is judged that the SOC amount SOC does not fall below the set lower limit value SOCX, the routine proceeds to step 44 where it is judged if the SOC amount SOC exceeds a preset upper limit value SOCY. When it is judged that the SOC amount SOC exceeds the preset upper limit value SOCY, the routine proceeds to step 45 where the power generation command is cancelled. If the power generation command is cancelled, the generator 23 stops being driven by the internal combustion engine 20 and the charging action of the battery 3 is stopped. Next, at step 46, the regenerative control is stopped.

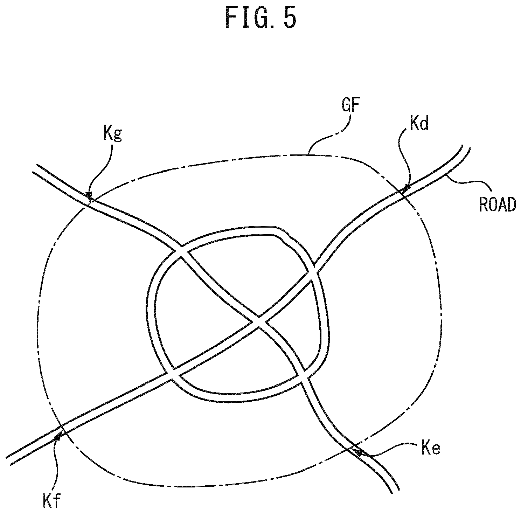

Now then, in recent years, from the viewpoint of prevention of air pollution, from the viewpoint of prevention of noise, or from other viewpoints, engine drive restricted zones restricting operation of internal combustion engines have been established. An increasing number of countries have established controls prohibiting operation of internal combustion engines in such engine drive restricted zones. FIG. 5 schematically shows a boundary GF between the inside of the engine drive restricted zone and the outside of the engine drive restricted zone established in a certain region. The inside of this boundary GF is made the engine drive restricted zone. This boundary GF is usually called "geofencing". This boundary GF is sometimes fixed and is sometimes variable in position due to the situation of air pollution or some other reasons.

In FIG. 5, Kd, Ke, Kf, Kg show positions on the boundary GF at each road. At the road positions Kd, Ke, Kf, Kg positioned on the boundary GF, sometimes gates are provided. In this case, a rider of the vehicle 1 can recognize that the vehicle 1 has entered the inside of the engine drive restricted zone by its passing these gates. Further, at this time, if a signal is emitted showing that the vehicle 1 has entered the inside of the engine drive restricted zone from a device set at a gate, it is possible to recognize that the vehicle 1 has entered the inside of the engine drive restricted zone by receiving this signal.

On the other hand, information relating to the boundary GF, that is, geofencing, is sometimes stored in the map data storage device 10. Further, information relating to the boundary GF, that is, geofencing, is sometimes stored in the memory 34 of the server 30, and information relating to the boundary GF, that is, geofencing, is sometimes transmitted from the server 30 to the vehicle 1. In these cases, the position of the boundary GF, that is, geofencing, is displayed on a display screen of the navigation device 11 based on the map information stored in the map data storage device 10 or based on the map information transmitted from the server 30 to the vehicle 1. From the map information displayed on the display screen of the navigation device 11, it is possible to recognize that the vehicle 1 has entered the inside of an engine drive restricted zone.

Note that, in the case where the hybrid system shown in FIG. 2A is used, when the driver or other rider has recognized that the vehicle 1 has entered the inside of the engine drive restricted zone, usually the operating mode is made the EV mode by the driver, the internal combustion engine 20 is made to stop operation, and the vehicle 1 is driven by the electric motor 21. On the other hand, in the case where the hybrid system shown in FIG. 2B is used, when the driver or other rider has recognized that the vehicle 1 has entered the inside of the engine drive restricted zone, usually the internal combustion engine 20 is made to stop operation by the driver and the generator 23 is stopped being driven for charging the battery 3. Note that, when the vehicle 1 has entered the inside of the engine drive restricted zone, if the hybrid system shown in FIG. 2A is used, the operating mode is automatically made the EV mode, while if the hybrid system shown in FIG. 2B is used, sometimes the internal combustion engine 20 is automatically made to stop operation.

In this regard, when the vehicle 1 has entered the inside of the engine drive restricted zone, operation of the internal combustion engine 20 is prohibited, so the internal combustion engine 20 has to be made to stop operating and the electric motor 21 has to be used to drive the vehicle 1. In this regard, however, if using the electric motor 21 to drive the vehicle 1, if the SOC amount of the battery 3 ends up falling below the set lower limit value SOCX while the vehicle 1 is running at the inside of the engine drive restricted zone, the vehicle 1 will end up unable to run. Therefore, when it is predicted that the vehicle 1 will enter the inside of an engine drive restricted zone, the SOC amount of the battery 3 when the vehicle 1 enters the inside of the engine drive restricted zone is increased so that the SOC amount will not fall below the set lower limit value SOCX while the vehicle 1 is running in the inside of the engine drive restricted zone.

On the other hand, to make the SOC amount of the battery 3 increase, it is necessary to operate the internal combustion engine 20. In this case, the greater the amount of increase of the SOC amount, the more the amount of fuel consumed by the internal combustion engine 20 increases, so more air pollution is caused. The greater the amount of increase of the SOC amount, the more the output of the internal combustion engine 20 is made to increase, so the louder the noise generated by the internal combustion engine 20. Therefore, in case of increasing the SOC amount of the battery 3 when vehicle 1 enters the inside of an engine drive restricted zone, if enlarging the amount of increase of the SOC amount, air pollution increases and noise becomes louder around the path toward the inside of the engine drive restricted zone. Therefore, if increasing the SOC amount of the battery 3 when the vehicle 1 enters the inside of an engine drive restricted zone, it can be said to be desirable to keep the amount of increase of the SOC amount down to the minimum necessary extent.

In this regard, however, for example, if traffic congestion occurs at the inside of the engine drive restricted zone, time is required for the vehicle 1 to pass through the engine drive restricted zone and, as a result, the SOC amount ends up greatly falling while the vehicle 1 is running through the engine drive restricted zone. Therefore, in such a case, even if the SOC amount of the battery 3 when vehicle 1 enters the inside of the engine drive restricted zone has been increased somewhat, there is the danger of the SOC amount ending up falling below the set lower limit value SOCX while the vehicle 1 is running through the inside of the engine drive restricted zone. Therefore, if traffic congestion occurs in the engine drive restricted zone corresponding to the running route of the host vehicle 1, it is necessary to enlarge the amount of increase of the SOC amount of the battery 3 when the vehicle 1 enters the inside of the engine drive restricted zone. The same is true when traffic congestion is predicted as occurring in the engine drive restricted zone corresponding to the running route of the host vehicle 1.

On the other hand, if traffic congestion occurs at the outside of the engine drive restricted zone before the vehicle 1 enters the inside of the engine drive restricted zone, it is predicted that traffic congestion occurs inside of the engine drive restricted zone. Therefore, when congestion occurs or congestion is predicted as occurring in at least one of a running route leading to the inside of the engine drive restricted zone and a running route at the inside of the engine drive restricted zone, it is necessary to enlarge the amount of increase of the SOC amount of the battery 3 when the vehicle 1 enters the inside of the engine drive restricted zone.

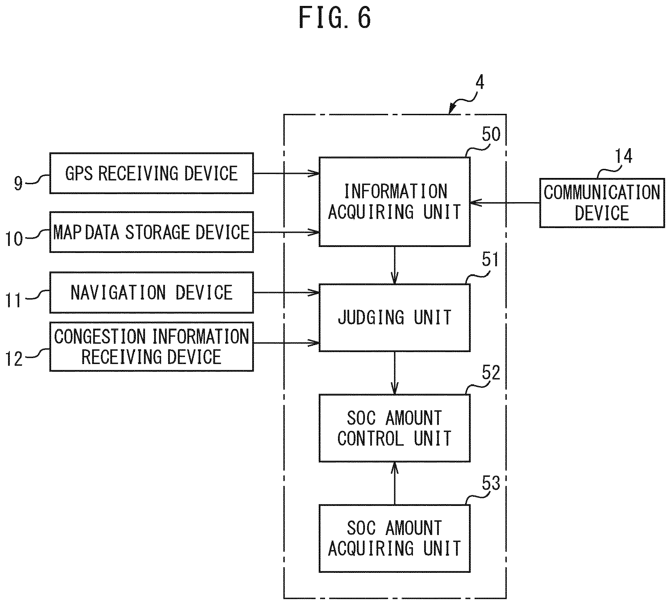

Therefore, in the embodiment according to the present invention, as shown in the view of the functional configuration of FIG. 6, in a vehicle control device of a hybrid vehicle driven by only an electric motor 21 or by both of an electric motor 21 and an internal combustion engine 20, a boundary GF is set between the inside of an engine drive restricted zone where operation of the internal combustion engine 20 is restricted and the outside of the engine drive restricted zone, the vehicle control device comprises a navigation device 11 searching for a running route up to a destination when a destination is input, a congestion information receiving device 12 receiving congestion information, an SOC amount acquiring part 53 acquiring an SOC amount of the battery 3 acting as a source of supply of electric power to the electric motor 21, an information acquiring unit 50 acquiring position information of the host vehicle 1 and information relating to that boundary GF, a judging unit 51 judging if congestion occurs or if congestion is predicted as occurring in at least one of a running route leading to the inside of the engine drive restricted zone and a running route at the inside of the engine drive restricted zone based on running routes found by the navigation device 11 and the above-mentioned congestion information when it is judged based on the information acquired by the information acquiring unit 50 that the host vehicle 1 is positioned at the outside of the engine drive restricted zone and when it is predicted based on the search results by the navigation device 11 that the host vehicle 1 will enter the inside of the engine drive restricted zone, and an SOC amount control unit 52 making an SOC amount when the host vehicle 1 enters inside of the engine drive restricted zone increase when it is judged by the judging part 51 that congestion occurs or if congestion is predicted as occurring in at least one of a running route leading to the inside of the engine drive restricted zone and a running route at the inside of the engine drive restricted zone compared with when it is judged that congestion does not occur or if congestion is predicted as not occurring in both a running route leading to the inside of the engine drive restricted zone and a running route at the inside of the engine drive restricted zone.

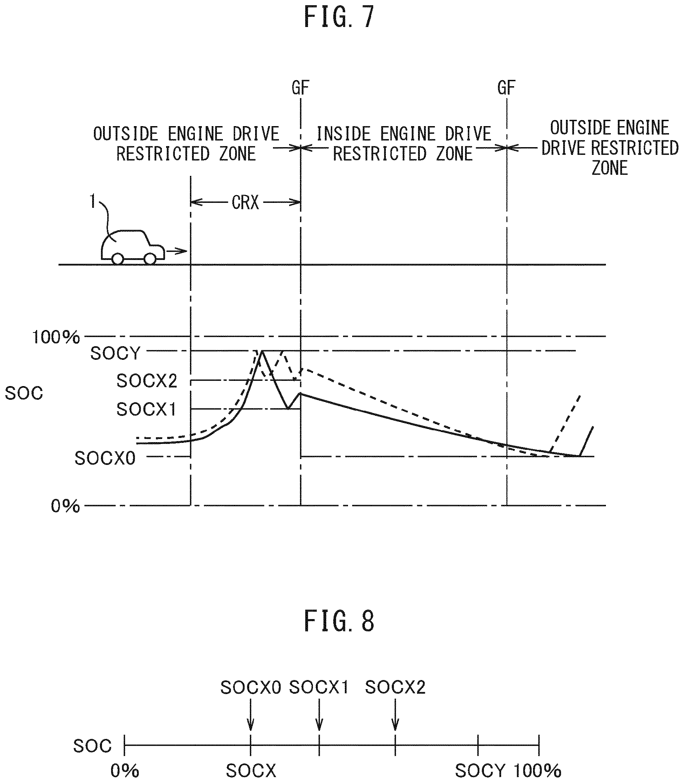

In this case, in the embodiment according to the present invention, by making the lower limit value SOCX set for the SOC amount increase, the SOC amount when the host vehicle 1 enters the inside of the engine drive restricted zone is made to increase. Next, this will be explained while referring to FIG. 7 and FIG. 8. Note that, FIG. 7 schematically shows the change along with time of the SOC amount at the host vehicle 1 when the host vehicle 1 is running from the outside of the engine drive restricted zone toward the inside of the engine drive restricted zone, while FIG. 8 shows the SOC amount similar to FIG. 3. Note that, in FIG. 7 and FIG. 8, the reference lower limit value SOCX of the SOC amount is shown by SOCXO. Usually, the reference lower limit value SOCXO is used as the lower limit value SOCX of the SOC amount. Further, in FIG. 7, the solid line shows the change in the SOC amount when congestion does not occur or congestion is predicted as not occurring at both of a running route of the host vehicle 1 at the outside of the engine drive restricted zone and a running route of the host vehicle 1 at the inside of the engine drive restricted zone.

In the example shown in FIG. 7, if congestion does not occur or congestion is predicted as not occurring at both of a running route of the host vehicle 1 at the outside of the engine drive restricted zone and a running route of the host vehicle 1 at the inside of the engine drive restricted zone, if the host vehicle 1 approaches the inside of the engine drive restricted zone, the lower limit value SOCX of the SOC amount is increased from the reference lower limit value SOCXO to SOCX1. If the lower limit value SOCX of the SOC amount is increased to SOCX1, the internal combustion engine 20 is operated, the charging action of the battery 3 is performed, and, as shown by the solid line, the SOC amount rises to the preset upper limit value SOCY. If the SOC amount rises to the preset upper limit value SOCY, the charging action of the battery 3 by the internal combustion engine 20 is stopped and, as a result, the SOC amount starts to fall. If the SOC amount falls to the lower limit value SOCX1, the internal combustion engine 20 is operated and the charging action of the battery 3 is performed whereby the SOC amount rises toward the preset upper limit value SOCY. Therefore, if the lower limit value SOCX of the SOC amount is made to increase to SOCX1, the SOC amount is maintained at the lower limit value SOCX1 or more.

If the host vehicle 1 enters the inside of the engine drive restricted zone, the lower limit value SOCX of the SOC amount is made to fall to the reference lower limit value SOCXO. On the other hand, if the host vehicle 1 enters the inside of the engine drive restricted zone, the SOC amount continues to fall along with the advance of the host vehicle 1. In this case, the lower limit value SOCX1 of the SOC amount is determined so that the SOC amount is the reference lower limit value SOCXO or more when the host vehicle 1 has passed through the inside of the engine drive restricted zone and exited at the outside of the engine drive restricted zone.

On the other hand, the broken line in FIG. 7 shows the change in the SOC amount when congestion occurs or congestion is predicted as occurring at least at one of a running route of the host vehicle 1 at the outside of the engine drive restricted zone and a running route of the host vehicle 1 at the inside of the engine drive restricted zone. In this case, in the example shown in FIG. 7, if the host vehicle 1 approaches the inside of the engine drive restricted zone, the lower limit value SOCX of the SOC amount is increased from the reference lower limit value SOCXO to the lower limit value SOCX2 larger than the lower limit value SOCX1. If the lower limit value SOCX of the SOC amount is increased to SOCX2, the internal combustion engine 20 is operated and the charging action of the battery 3 is performed whereupon, as shown by the broken line, the SOC amount rises to the preset upper limit value SOCY. If the SOC amount rises to the preset upper limit value SOCY, the charging action of the battery 3 by the internal combustion engine 20 is stopped and, as a result, the SOC amount starts to fall. If the SOC amount falls to the lower limit value SOCX2, the internal combustion engine 20 is operated and the charging action of the battery 3 is performed whereby the SOC amount rises toward the preset upper limit value SOCY. Therefore, if the lower limit value SOCX of the SOC amount is made to increase to SOCX2, the SOC amount is maintained at the lower limit value SOCX2 or more.

In this case as well, if the host vehicle 1 has entered the inside of the engine drive restricted zone, the lower limit value SOCX of the SOC amount is made to fall to the reference lower limit value SOCXO. On the other hand, if the host vehicle 1 enters the inside of the engine drive restricted zone, the SOC amount continues to fall along with the advance of the host vehicle 1. In this case, if assuming that congestion occurs in the running route of the host vehicle 1 inside of the engine drive restricted zone, the amount of fall of the SOC amount per unit driving distance increases, and therefore the SOC amount rapidly falls such as shown by the broken line compared with the case shown by the solid line where no congestion occurs. In this case, the lower limit value SOCX2 of the SOC amount is determined so that the SOC amount becomes the reference lower limit value SOCXO or more when the host vehicle 1 passes through the inside of the engine drive restricted zone and exits at the outside of the engine drive restricted zone. That is, compared with the case where no congestion occurs, the lower limit value SOCX2 of the SOC amount 2 is made a value larger than the lower limit value SOCX1 so that the SOC amount becomes the reference lower limit value SOCXO or more when the host vehicle 1 passes through the inside of the engine drive restricted zone and exits at the outside of the engine drive restricted zone even if the SOC amount rapidly falls.

In the embodiment according to the present invention, inside the electronic control unit 4 mounted in the vehicle 1, a charging control unit is formed controlling the charging action of the battery 3 by the internal combustion engine 20 if the SOC amount falls to the lower limit value SOCX. In this charging control unit, the charging control routine shown in FIG. 4 is performed. In this way, in the embodiment according to the present invention, a charging control unit controlling the charging action of the battery 3 by the internal combustion engine 20 if the SOC amount falls to the lower limit value SOCX is provided. When it is judged that the host vehicle 1 is located at the outside of an engine drive restricted zone based on the information acquired by the information acquiring part 50 and it is predicted that the host vehicle 1 will enter inside of the engine drive restricted zone based on the search result of the navigation device 11, the lower limit value SOCX of the SOC amount is increased when congestion occurs or congestion is predicted as occurring in at least one of a running route leading to the inside of the engine drive restricted zone and a running route at the inside of the engine drive restricted zone, compared with when it is judged that congestion does not occur or congestion is predicted as not occurring at both of a running route leading to the inside of the engine drive restricted zone and a running route at the inside of the engine drive restricted zone.

On the other hand, in the embodiment according to the present invention, the SOC amount falling while the host vehicle 1 is passing through the inside of the engine drive restricted zone along running routes found by the navigation device 11 is calculated, and the lower limit value SOCX1 and the lower limit value SOCX2 are calculated by using the calculated fallen SOC amount $\Delta$SOC. This fallen SOC amount $\Delta$SOC is calculated at the fallen SOC calculating unit formed inside the electronic control unit 4 mounted in the vehicle 1. That is, in the embodiment according to the present invention, the fallen SOC calculating unit is provided calculating the SOC amount falling while the host vehicle 1 is passing through the inside of an engine drive restricted zone along running routes found by the navigation device 11, and the lower limit value SOCX1 and the lower limit value SOCX2 are calculated by using the fallen SOC amount calculated by the fallen SOC calculating unit. In other words, the SOC amount when the host vehicle 1 enters the inside of an engine drive restricted zone is found by using this fallen SOC amount.

Therefore, next, one example of the method of calculation of the fallen SOC amount $\Delta$SOC will be explained. Energy EX consumed while passing through the inside of the engine drive restricted zone along running routes found by the navigation device 11, as shown by the following formula, is the sum of loss Ef due to friction while passing through the engine drive restricted zone, amount of change $\Delta$Eh of potential energy, and amount of change $\Delta$Ev of kinetic energy:

$$EX = Ef + \Delta Eh + \Delta Ev$$

Now then, the loss Ef due to friction is the sum value of the loss "f" due to instantaneous friction while passing through the inside of the engine drive restricted zone. Here, if "v" is the vehicle speed, the loss "f" due to instantaneous friction is expressed by a quadratic formula of the vehicle speed "v" as shown in the following formula:

$$f = av^2 + bv + c \text{ (where "a", "b", and "c" are constants)}$$

On the other hand, the amount of change $\Delta$Eh of the potential energy is expressed as in the following formula by the difference in elevation $\Delta$h between the position when entering inside of the engine drive restricted zone and the position when exiting the engine drive restricted zone:

$$\Delta Eh = mg\Delta h \text{ (where "m" is mass of vehicle 1, while "g" is acceleration of gravity)}$$

Further, the amount of change $\Delta$Ev of the kinetic energy is expressed as in the following formula when representing the vehicle speed when entering inside of the engine drive restricted zone by v0 and the vehicle speed when exiting from the engine drive restricted zone by "v":

$$\Delta Eh = 1/2 \cdot m(v^2 - v0^2)$$

On the other hand, if approximating the conversion efficiency when the output of the battery 3 is converted to mechanical output by a constant $\mu$, the energy $\Delta Eb$ taken out from the battery 3 while passing through the inside of the engine drive restricted zone becomes as shown in the following formula:

$$\Delta Eb = EX/\mu$$

On the other hand, if making the charging capacity of the battery 3 Q and approximating the output voltage of the battery 3 by a constant V, the energy Eq held by the battery 3 becomes as in the following formula:

$$Eq = QV$$

Therefore, the fallen SOC amount $\Delta SOC$ is expressed like in the following formula:

$$\Delta SOC = \Delta Eb/Eq$$

In this way, the fallen SOC amount $\Delta SOC$ is calculated. Note that, in calculating the fallen SOC amount $\Delta SOC$, the difference in elevation $\Delta h$ is calculated based on the map data stored in the map data storage device 10. On the other hand, the vehicle speed "v" is made the legal speed in the running routes found if congestion does not occur in the running routes found by the navigation device 11 and is made the speed calculated based on the congestion information if congestion occurs. For example, if the congestion information is information that the congested zone is S (km) and the predicted time period required for passing through the congested zone is T (hr), S (km)/T (hr) is made the speed.

Note that, strictly speaking, the conversion efficiency, that is, the constant $\mu$, depends on the drive output of the vehicle 1 and the vehicle speed "v", so $\Delta Eb$ becomes a function of the drive output of the vehicle 1 and the vehicle speed "v". The output voltage V of the battery 3 is dependent on the SOC amount, so Eq becomes a function of the SOC amount. Therefore, when strictly finding the fallen SOC amount $\Delta SOC$, the fallen SOC amount $\Delta SOC$ is calculated while considering changes in the drive output of the vehicle 1, the vehicle speed "v", and the SOC amount. Note that, an explanation of the method of calculation of the fallen SOC amount $\Delta SOC$ when strictly finding the fallen SOC amount $\Delta SOC$ will be omitted here.

Now then, in the embodiment according to the present invention, when it is judged that the host vehicle 1 is positioned at the outside of the engine drive restricted zone and it is predicted that the host vehicle 1 will enter inside of an engine drive restricted zone, it is judged if the host vehicle 1 will momentarily enter inside of the engine drive restricted zone. When it is judged that the host vehicle 1 will momentarily enter inside of the engine drive restricted zone, it is judged if congestion occurs or congestion is predicted as occurring in at least one of a running route leading to the inside of the engine drive restricted zone and a running route at the inside of the engine drive restricted zone. In this case, in the embodiment according to the present invention, it is judged that the host vehicle 1 will momentarily enter the inside of the engine drive restricted zone based on whether the time period required for the host vehicle 1 to reach the boundary GF is within a preset time period or whether the distance between the host vehicle 1 and the boundary GF is within a preset distance.

That is, in the embodiment according to the present invention, when it is judged that the host vehicle 1 is positioned at the outside of the engine drive restricted zone based on information acquired by the information acquiring unit 50 and it is predicted that the host vehicle 1 will enter inside of the engine drive restricted zone based on the result of the search by the navigation device 11, it is further judged if the time period for the host vehicle 1 to reach the boundary GF is within the preset time period or if the distance between the host vehicle 1 and the boundary GF is within the preset distance. When it is judged that the time period for the host vehicle 1 to reach the boundary GF is within the preset time period or when it is judged that the distance between the host vehicle 1 and the boundary GF is within the preset distance, it is judged that congestion occurs or congestion is predicted as occurring in at least one of a running route leading to the inside of the engine drive restricted zone and a running route at the inside of the engine drive restricted zone.

Now then, in the embodiment according to the present invention, when it is judged that the time period required for the host vehicle 1 to reach the boundary GF is within the preset time period or when it is judged that the distance between the host vehicle 1 and the boundary GF is within the preset distance, a proximity flag showing that the host vehicle 1 has approached the boundary GF is set. If this proximity flag is set, control for increasing the SOC amount when the host vehicle 1 enters the inside of an engine drive restricted zone is performed based on the congestion information.

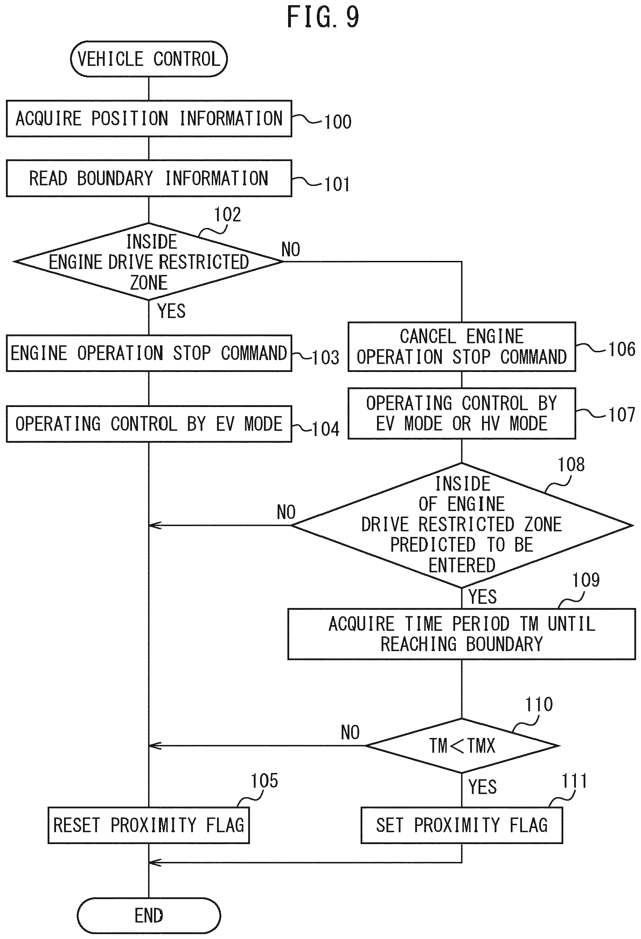

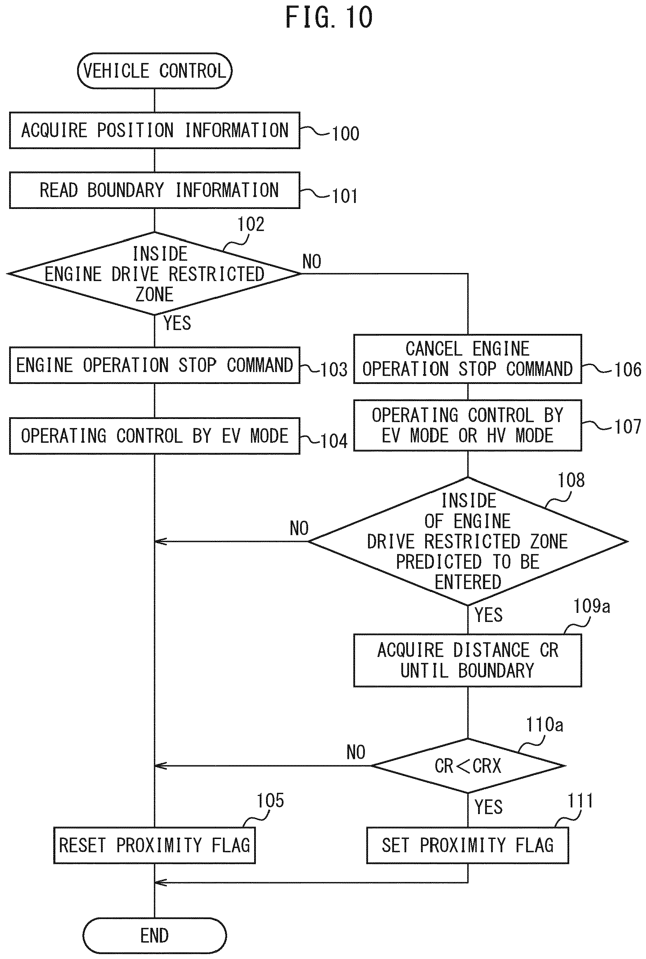

FIG. 9 and FIG. 10 show control routines of the vehicle 1 performed in embodiments according to the present invention. These routines are performed at every fixed time period in the electronic control unit 4 mounted in the host vehicle 1. Note that, FIG. 9 shows the case where the proximity flag is set when it is judged that the time period required for the host vehicle 1 to reach the boundary GF is within the preset time period while FIG. 10 shows the case where the proximity flag is set when it is judged that the distance between the host vehicle 1 and the boundary GF is within the preset distance.

Referring to FIG. 9, first, at step 100, the current position of the vehicle 1 is acquired based on the received signals received by the GPS receiving device 9 and the map data stored in the map data storage device 10. Next, at step 101, the road positions Kd, Ke, Kf, Kg located on the boundary GF between the inside of the engine drive restricted zone and the outside of the engine drive restricted zone and other information relating to the boundary GF are read. In this case, if the information relating to the boundary GF is stored in the map data storage device 10, the information relating to the boundary GF stored in the map data storage device 10 is read, while if the information relating to the boundary GF is stored in the server 30, the information relating to the boundary GF sent from the server 30 to the vehicle 1 is read.

Next, at step 102, it is judged if the vehicle 1 is currently running through the inside of the engine drive restricted zone where operation of the internal combustion engine 20 is restricted based on the acquired current position of the vehicle 1 and the information relating to the boundary GF. When it is judged that the vehicle 1 is currently running through the inside of the engine drive restricted zone, the routine proceeds to step 103 where a command to stop operation of the internal combustion engine 20 is issued. If the command to stop operation of the internal combustion engine 20 is issued, the routine proceeds to step 104 where operation of the internal combustion engine 20 is stopped by the driver of the vehicle 1 or automatically, and operating control using the electric motor 21 to drive the vehicle 1 is continued until the command for stopping operation of the internal combustion engine 20 is cancelled. That is, at this time, operating control is performed in the EV mode where only the electric motor 21 is used to drive the vehicle 1. Next, at step 105, the proximity flag is reset.

On the other hand, when at step 102 it is judged that the vehicle 1 is not currently running through the inside of the engine drive restricted zone, the routine proceeds to step 106 where the command for stopping operation of the internal combustion engine 20 is cancelled. If the command for stopping operation of the internal combustion engine 20 is cancelled, operation of the internal combustion engine 20 becomes possible. Next, at step 107, operating control is performed in accordance with the operating state of the vehicle 1 in either of the EV mode where only the electric motor 21 is used to drive the vehicle 1 and the HV mode where both of the internal combustion engine 20 and electric motor 21 are used to drive the vehicle 1. Note that, at this time, the internal combustion engine 20 can be used to drive the generator 23 to charge the battery 3.

Next, at step 108, it is judged whether the host vehicle 1 is predicted to enter inside of the engine drive restricted zone based on the search result of the navigation device 11. When the host vehicle 1 is not predicted to enter inside of the engine drive restricted zone, the routine proceeds to step 105 where the proximity flag is reset. As opposed to this, when the host vehicle 1 is predicted to enter inside of the engine drive restricted zone, the routine proceeds to step 109 where the time period TM required for the host vehicle 1 to reach the boundary GF is calculated based on the acquired current position of the vehicle 1 and the information relating to the boundary GF. In this case, if the time period required for the host vehicle 1 to reach the boundary GF is provided by the navigation device 13, the time period TM provided by the navigation device 13 is utilized. Next, at step 110, it is judged if the time period TM required for the host vehicle 1 to reach the boundary GF is within the preset time period TMX.

If the time period TM required for the host vehicle 1 to reach the boundary GF is not within the preset time period TM, the routine proceeds to step 105 where the proximity flag is reset. As opposed to this, if the time period TM required for the host vehicle 1 to reach the boundary GF is within the preset time period TM, the routine proceeds to step 111 where the proximity flag is set. If the proximity flag is set, as explained later, control for increasing the SOC amount when the host vehicle 1 enters the inside of the engine drive restricted zone is performed based on the congestion information. Specifically, processing is performed determining the lower limit value SOCX of the SOC amount when the host vehicle 1 enters the inside of the engine drive restricted zone based on the congestion information.

FIG. 10 shows the vehicle control routine in the case where the proximity flag is set when it is judged that the distance between the host vehicle 1 and the boundary GF is within the preset distance. Steps 100 to 108 and step 111 in the vehicle control routine shown in FIG. 10 are the same as steps 100 to 108 and step 111 in the vehicle control routine shown in FIG. 9. Only steps 109a and 110a in the vehicle control routine shown in FIG. 10 differ from steps 109 and 110 in the vehicle control routine shown in FIG. 9. Therefore, in the vehicle control routine shown in FIG. 10, the explanation of steps 100 to 108 will be omitted. Only the parts relating to steps 109a and 110a will be explained.

Referring to FIG. 10, at step 108, when it is predicted that the host vehicle 1 will enter inside of the engine drive restricted zone based on the search results of the navigation device 13, the routine proceeds to step 109a where a distance CR between the host vehicle 1 and the boundary GF is calculated based on the acquired current position of the vehicle 1 and information relating to the boundary GF. In this case, if the distance CR between the host vehicle 1 and the boundary GF is provided by the navigation device 13, the distance CR provided by the navigation device 13 is utilized. Next, at step 110a, it is judged if the distance CR between the host vehicle 1 and the boundary GF is within the preset distance CRX

If the distance CR between the host vehicle 1 and the boundary GF is not within the preset distance CRX, the routine proceeds to step 105 where the proximity flag is reset. As opposed to this, if the distance CR between the host vehicle 1 and the boundary GF is within the preset distance CRX, the routine proceeds to step 111 where the proximity flag is set. If the proximity flag is set, as explained later, control for increasing the SOC amount when the host vehicle 1 enters the inside of the engine drive restricted zone is performed based on the congestion information. Specifically, processing is performed determining the lower limit value SOCX of the SOC amount when the host vehicle 1 enters the inside of the engine drive restricted zone based on the congestion information.

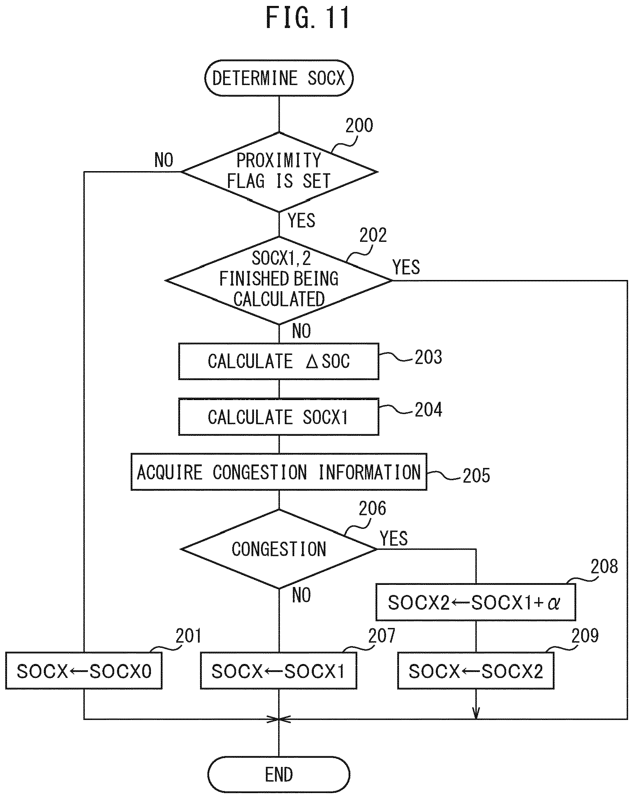

Next, referring to FIG. 11 to FIG. 15, various embodiments of the SOCX determining processing routine for determining the lower limit value SOCX of the SOC amount when the host vehicle 1 enters the inside of the engine drive restricted zone based on congestion information will be successively explained. The SOCX determining processing routine is performed every fixed time period in the electronic control unit 4 mounted in the host vehicle 1. First, referring to the first embodiment of the SOCX determining processing routine shown in FIG. 11, first, at step 200, it is judged if the proximity flag is set. When the proximity flag is not set, the routine proceeds to step 201 where the reference lower limit value SOCXO (FIG. 7 and FIG. 8) is made the lower limit value SOCX of the SOC amount used in the charging control routine of FIG. 4. Next, the processing cycle is ended.

As opposed to this, when at step 200 it is judged that the proximity flag is set, the routine proceeds to step 202 where it is judged if the lower limit value SOCX1 or the lower limit value SOCX2 (FIG. 7 and FIG. 8) has finished being calculated. When it is judged that the lower limit value SOCX1 or the lower limit value SOCX2 has finished being calculated, the processing cycle is ended. As opposed to this, when it is judged that the lower limit value SOCX1 or the lower limit value SOCX2 has not finished being calculated, the routine proceeds to step 203 where the above-mentioned method of calculation of the fallen SOC amount $\Delta$SOC is used to calculate the SOC amount $\Delta$SOC falling while the host vehicle 1 is passing through the inside of the engine drive restricted zone when congestion does not occur at the running route of the host vehicle 1. Next, at step 204, for example, by adding the fallen SOC amount $\Delta$SOC and a constant value "k" to the reference lower limit value SOCXO, the lower limit value SOCX1 (=reference lower limit value SOCXO+fallen SOC amount $\Delta$SOC+k) is calculated.

Next, at step 205, congestion information is acquired by the congestion information receiving device 12. Next, at step 206, it is judged if congestion occurs or congestion is predicted as occurring in at least one of a running route leading to the inside of the engine drive restricted zone and a running route at the inside of the engine drive restricted zone based on the running routes found by the navigation device 11 and congestion information acquired by the congestion information receiving device 12. When at step 206 it is judged that congestion does not occur or congestion is predicted as not occurring at both of a running route leading to the inside of the engine drive restricted zone and a running route at the inside of the engine drive restricted zone, the routine proceeds to step 207 where the lower limit value SOCX1 calculated at step 204 is made the lower limit value SOCX of the SOC amount used in the charging control routine of FIG. 4.

As opposed to this, when at step 206 it is judged that congestion occurs or congestion is predicted as occurring in at least one of a running route leading to the inside of the engine drive restricted zone and a running route at the inside of the engine drive restricted zone, the routine proceeds to step 208 where, for example, by adding a set value $\alpha$ to the lower limit value SOCX1 calculated at step 204, the lower limit value SOCX2 (=lower limit value SOCX1+$\alpha$) is calculated. Next, at step 209, the lower limit value SOCX2 calculated at step 208 is made the lower limit value SOCX of the SOC amount used in the charging control routine of FIG. 4. Therefore, in the first embodiment shown in FIG. 11, the lower limit value SOCX of the SOC amount when the host vehicle 1 enters the inside of the engine drive restricted zone is increased from the reference lower limit value SOCXO. At this time, the lower limit value SOCX2 in the case where congestion occurs or congestion is predicted as occurring in at least one of a running route leading to the inside of the engine drive restricted zone and a running route at the inside of the engine drive restricted zone is made to further increase by exactly the set value $\alpha$ from the lower limit value SOCX1 in the case where congestion does not occur or congestion is predicted as not occurring at both of a running route leading to the inside of the engine drive restricted zone and a running route at the inside of the engine drive restricted zone.

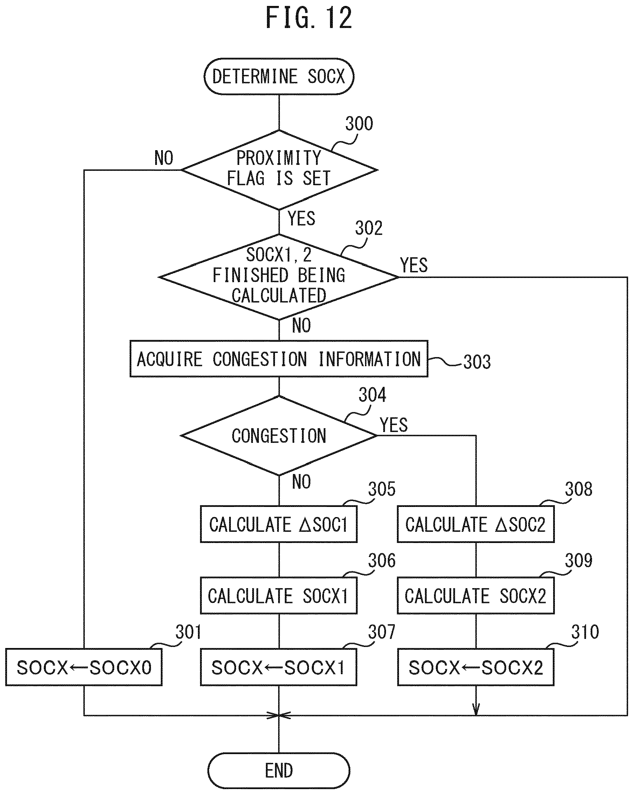

Next, a second embodiment of the SOCX determining processing routine shown in FIG. 12 will be explained. Referring to FIG. 12, first, at step 300, it is judged if the proximity flag is set. When the proximity flag is not set, the routine proceeds to step 301 where the reference lower limit value SOCXO is made the lower limit value SOCX of the SOC amount used in the charging control routine of FIG. 4. Next, the processing cycle is ended. As opposed to this, when at step 300 it is judged that the proximity flag is set, the routine proceeds to step 302 where it is judged if the lower limit value SOCX1 or the lower limit value SOCX2 has finished being calculated. When it is judged that the lower limit value SOCX1 or the lower limit value SOCX2 has finished being calculated, the processing cycle is ended. As opposed to this, when it is judged that the lower limit value SOCX1 or the lower limit value SOCX2 has not finished being calculated, the routine proceeds to step 303 where congestion information is acquired by the congestion information receiving device 12.

Next, at step 304, it is judged if congestion occurs or congestion is predicted as occurring in at least one of a running route leading to the inside of the engine drive restricted zone and a running route at the inside of the engine drive restricted zone based on the running routes found by the navigation device 11 and congestion information acquired by the congestion information receiving device 12. When at step 304 it is judged that congestion does not occur or congestion is predicted as not occurring at both of a running route leading to the inside of the engine drive restricted zone and a running route at the inside of the engine drive restricted zone, the routine proceeds to step 305 where the above-mentioned method of calculation of the fallen SOC amount $\Delta SOC$ is used to calculate the SOC amount $\Delta SOC1$ falling while the host vehicle 1 is passing through the inside of the engine drive restricted zone when congestion does not occur in the running route of the host vehicle 1. Next, at step 306, for example, by adding the fallen SOC amount $\Delta SOC1$ and a constant value "k" to the reference lower limit value SOCXO, the lower limit value SOCX1 (=reference lower limit value SOCXO+fallen SOC amount $\Delta SOC1+k$) is calculated. Next, at step 307, the lower limit value SOCX1 calculated at step 306 is made the lower limit value SOCX of the SOC amount used in the charging control routine of FIG. 4.

As opposed to this, when at step 304 it is judged that congestion occurs or congestion is predicted as occurring in at least one of a running route leading to the inside of the engine drive restricted zone and a running route at the inside of the engine drive restricted zone, the routine proceeds to step 308 where the above-mentioned method of calculation of the fallen SOC amount $\Delta SOC$ is used to calculate the SOC amount $\Delta SOC2$ falling while the host vehicle 1 is passing through the inside of the engine drive restricted zone when congestion occurrs in the running route of the host vehicle 1. Next, at step 309, for example, by adding the fallen SOC amount $\Delta SOC2$ and a constant value "k" to the reference lower limit value SOCXO, the lower limit value SOCX2 (=reference lower limit value SOCXO+fallen SOC amount $\Delta SOC2+k$) is calculated. Next, at step 310, the lower limit value SOCX2 calculated at step 309 is made the lower limit value SOCX of the SOC amount used in the charging control routine of FIG. 4.

In this case, the fallen SOC amount $\Delta SOC2$ becomes larger than the fallen SOC amount $\Delta SOC1$. Therefore, in the second embodiment shown in FIG. 12 as well, the lower limit value SOCX of the SOC amount when the host vehicle 1 enters the inside of the engine drive restricted zone is made to increase from the reference lower limit value SOCXO. At this time, the lower limit value SOCX2 in the case where congestion occurs or congestion is predicted as occurring in at least one of a running route leading to the inside of the engine drive restricted zone and a running route at the inside of the engine drive restricted zone is made to further increase from the lower limit value SOCX1 in the case where congestion does not occur or congestion is predicted as not occurring at both of a running route leading to the inside of the engine drive restricted zone and a running route at the inside of the engine drive restricted zone.

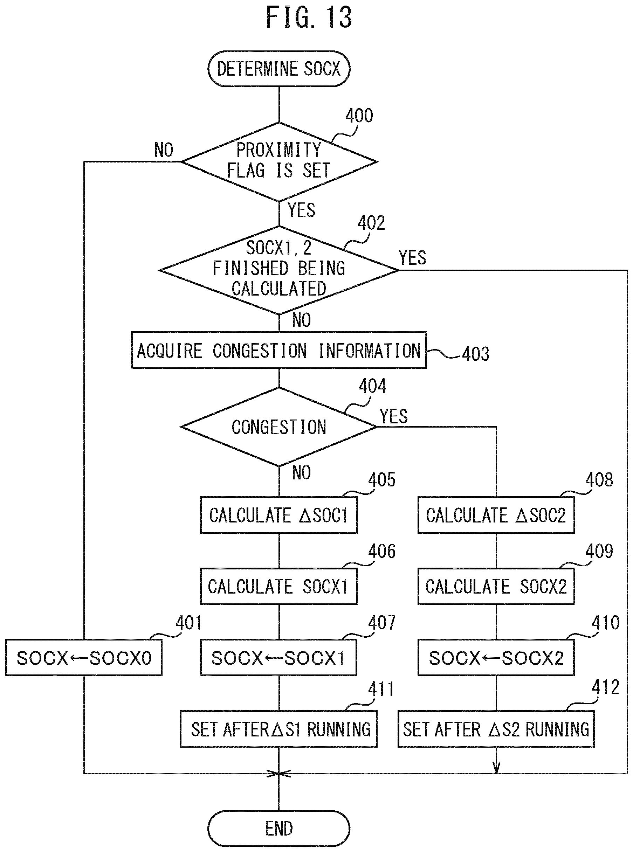

Next, a third embodiment of the SOCX determining processing routine shown in FIG. 13 will be explained. Note that, step 400 to step 410 of the SOCX determining processing routine shown in FIG. 13 respectively are substantially the same as step 300 to step 310 of the SOCX determining processing routine shown in FIG. 12. That is, referring to FIG. 13, first, at step 400, it is judged if the proximity flag is set. When the proximity flag is not set, the routine proceeds to step 401 where the reference lower limit value SOCXO is made the lower limit value SOCX of the SOC amount used in the charging control routine of FIG. 4. Next, the processing cycle is ended. As opposed to this, when at step 400 it is judged that the proximity flag is set, the routine proceeds to step 402 where it is judged if the lower limit value SOCX1 or the lower limit value SOCX2 has finished being calculated. When it is judged that the lower limit value SOCX1 or the lower limit value SOCX2 has finished being calculated, the processing cycle is ended. As opposed to this, when it is judged that the lower limit value SOCX1 or the lower limit value SOCX2 has not finished being calculated, the routine proceeds to step 403 where congestion information is acquired by the congestion information receiving device 12.

Next, at step 404, it is judged if congestion occurs or congestion is predicted as occurring in at least one of a running route leading to the inside of the engine drive restricted zone and a running route at the inside of the engine drive restricted zone based on running routes found by the navigation device 11 and congestion information acquired by the congestion information receiving device 12,. When at step 404 it is judged that congestion does not occur or congestion is predicted as not occurring at both of a running route leading to the inside of the engine drive restricted zone and a running route at the inside of the engine drive restricted zone, the routine proceeds to step 405 where the above-mentioned method of calculation of the fallen SOC amount $\Delta SOC$ is used to calculate the SOC amount $\Delta SOC1$ falling while the host vehicle 1 passes through the inside of the engine drive restricted zone when congestion does not occur in the running route of the host vehicle 1. Next, at step 406, for example, by adding the fallen SOC amount $\Delta SOC1$ and a constant value "k" to the reference lower limit value SOCXO, the lower limit value SOCX1 (=reference lower limit value SOCXO+fallen SOC amount $\Delta SOC1+k$)is calculated. Next, at step 407, the lower limit value SOCX1 calculated at step 406 is made the lower limit value SOCX of the SOC amount used in the charging control routine of FIG. 4.

Next, at step 411, after running by $\Delta S1$ from when first proceeding to step 411 after the proximity flag is set, SOC amount control processing is performed for making the lower limit value SOCX of the SOC amount used in the charging control routine of FIG. 4 increase to the lower limit value SOCX1. In this SOC increase processing, if the proximity flag is set in accordance with the time period TM required for the host vehicle 1 to reach the boundary GF, $\Delta S1$ is made the preset time period. Therefore, in this case, after the proximity flag is set, after the elapse of the $\Delta S1$

time period, the lower limit value SOCX of the SOC amount used in the charging control routine of FIG. 4 is set to the lower limit value SOCX1. On the other hand, if the proximity flag is set according to the distance CR between the host vehicle 1 and the boundary GF, $\Delta$S1 is made a preset distance. Therefore, in this case, after running by the distance $\Delta$S1 after the proximity flag is set, the lower limit value SOCX of the SOC amount used in the charging control routine of FIG. 4 is set to the lower limit value SOCX1.

On the other hand, when at step 404 it is judged that congestion occurs or congestion is predicted as occurring in at least one of a running route leading to the inside of the engine drive restricted zone and a running route at the inside of the engine drive restricted zone, the routine proceeds to step 408 where the above-mentioned method of calculation of the fallen SOC amount $\Delta$SOC is used to calculate the SOC amount $\Delta$SOC2 falling while the host vehicle 1 is passing through the inside of the engine drive restricted zone when congestion occurs in the running route of the host vehicle 1. Next, at step 409, for example, by adding the fallen SOC amount $\Delta$SOC2 and a constant value "k" to the reference lower limit value SOCXO, the lower limit value SOCX2 (=reference lower limit value SOCXO+fallen SOC amount $\Delta$SOC2+k) is calculated. Next, at step 410, the lower limit value SOCX2 calculated at step 409 is made the lower limit value SOCX of the SOC amount used in the charging control routine of FIG. 4.

Next, at step 412, after running by $\Delta$S2 from when first proceeding to step 412 after the proximity flag is set, SOC increase processing is performed for making the lower limit value SOCX of the SOC amount used in the charging control routine of FIG. 4 increase to the lower limit value SOCX2. In this SOC increase processing, if the proximity flag is set in accordance with the time period TM required for the host vehicle 1 to reach the boundary GF, $\Delta$S2 is made the preset time period. Therefore, in this case, after the elapse of the $\Delta$S2 time period after the proximity flag is set, the lower limit value SOCX of the SOC amount used in the charging control routine of FIG. 4 is set to the lower limit value SOCX2. On the other hand, if the proximity flag is set according to the distance CR between the host vehicle 1 and the boundary GF, $\Delta$S2 is made a preset distance. Therefore, in this case, after running by the distance $\Delta$S2 after the proximity flag is set, the lower limit value SOCX of the SOC amount used in the charging control routine of FIG. 4 is set to the lower limit value SOCX2. Note that, this third embodiment as well, the fallen SOC amount $\Delta$SOC2 is made larger than the fallen SOC amount $\Delta$SOC1.

In this regard, time is required for making the SOC amount increase when the host vehicle enters the inside of the engine drive restricted zone, and it is preferable that the larger the lower limit value SOCX to be set, that is, when the lower limit value SOCX is made SOCX2 rather than when the lower limit value SOCX is made SOCX1, the earlier the SOC amount increasing processing for making the lower limit value SOCX increase be made to start. For this reason, in this third embodiment, the value of $\Delta$S2 set at step 412 is made a value smaller than the value of $\Delta$S1 set at step 411. That is, in this third embodiment, the start of the SOC increase processing for making the SOC amount increase when the host vehicle enters the inside of the engine drive restricted zone is made earlier when it is judged that congestion occurs or congestion is predicted as occurring in at least one of a running route leading to the inside of the engine drive restricted zone and a running route at the inside of the engine drive restricted zone compared with when it is judged that congestion does not occur or congestion is predicted as not occurring at both of a running route leading to the inside of the engine drive restricted zone and a running route at the inside of the engine drive restricted zone.

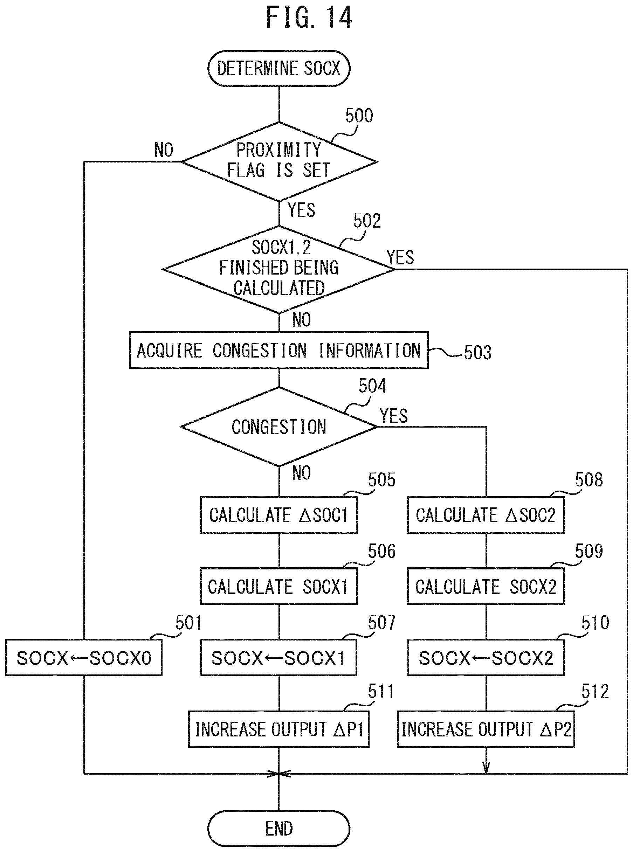

Next, a fourth embodiment of the SOCX determining processing routine shown in FIG. 14 will be explained. Note that, step 500 to step 510 of the SOCX determining processing routine shown in FIG. 14 are respectively substantially the same as step 300 to step 310 of the SOCX determining processing routine shown in FIG. 12. That is, referring to FIG. 14, first, at step 500, it is judged if the proximity flag is set. When the proximity flag is not set, the routine proceeds to step 501 where the reference lower limit value SOCXO is made the lower limit value SOCX of the SOC amount used in the charging control routine of FIG. 4. Next, the processing cycle is ended. As opposed to this, when at step 500 it is judged that the proximity flag is set, the routine proceeds to step 502 where it is judged if the lower limit value SOCX1 or the lower limit value SOCX2 has finished being calculated. When it is judged that the lower limit value SOCX1 or the lower limit value SOCX2 has finished being calculated, the processing cycle is ended. As opposed to this, when it is judged that the lower limit value SOCX1 or the lower limit value SOCX2 has not finished being calculated, the routine proceeds to step 503 where congestion information is acquired by the congestion information receiving device 12.

Next, at step 504, it is judged whether congestion occurs or congestion is predicted as occurring in at least one of a running route leading to the inside of the engine drive restricted zone and a running route at the inside of the engine drive restricted zone based on the running routes found by the navigation device 11 and congestion information acquired by the congestion information receiving device 12. When at step 504 it is judged that congestion does not occur or congestion is predicted as not occurring at both of a running route leading to the inside of the engine drive restricted zone and a running route at the inside of the engine drive restricted zone, the routine proceeds to step 505 where the above-mentioned method of calculation of the fallen SOC amount $\Delta$SOC is used to calculate the SOC amount $\Delta$SOC1 falling while the host vehicle 1 is passing through the inside of the engine drive restricted zone when congestion does not occur in the running route of the host vehicle 1. Next, at step 506, for example, by adding the fallen SOC amount $\Delta$SOC1 and a constant value "k" to the reference lower limit value SOCXO, the lower limit value SOCX1 (=reference lower limit value SOCXO+fallen SOC amount $\Delta$SOC1+k) is calculated. Next, at step 507, the lower limit value SOCX1 calculated at step 506 is made the lower limit value SOCX of the SOC amount used in the charging control routine of FIG. 4. Next, at step 511, the output of the internal combustion engine 20 when driving the generator 23 to increase the SOC amount is made to increase by exactly $\Delta$P1.

On the other hand, when at step 504 it is judged that congestion occurs or congestion is predicted as occurring in at least one of a running route leading to the inside of the engine drive restricted zone and a running route at the inside of the engine drive restricted zone, the routine proceeds to step 508 where the above-mentioned method of calculation of the fallen SOC amount $\Delta$SOC is used to calculate the SOC amount $\Delta$SOC2 falling while the host vehicle is passing through the inside of the engine drive restricted zone when congestion occurs at the running route of the host vehicle. Next, at step 509, for example, by adding the fallen SOC amount $\Delta$SOC2 and a constant value "k" to the reference lower limit value SOCXO, the lower limit value SOCX2 (=reference lower limit value SOCXO+fallen SOC amount $\Delta$SOC2+k) is calculated. Next, at step 510, the lower limit value SOCX2 calculated at step 509 is made the lower limit value SOCX of the SOC amount used in the charging control routine of FIG. 4. Next, at step 512, the output of the internal combustion engine 20 when driving the generator 23 to increase the SOC amount is made to increase by exactly $\Delta$P2.

In this regard, time is required for making the SOC amount increase when the host vehicle enters the inside of the engine drive restricted zone, and it is preferable that the larger the lower limit value SOCX to be set, that is, when the lower limit value SOCX is made SOCX2 rather than when the lower limit value SOCX is made SOCX1, the more rapidly the lower limit value SOCX be made to increase. For this reason, in this fourth embodiment, the amount of increase of the output of the internal combustion engine 20 when driving the generator 23 so as to charge the battery 3 is made larger in the case of the amount of increase of output$\Delta$P2 of the internal combustion engine 20 made to increase at step 512 than the amount of increase of output$\Delta$P1 of the internal combustion engine 20 made to increase at step 511. That is, in this fourth embodiment, the output of the internal combustion engine 20 is raised when it is judged that congestion occurs or congestion is predicted as occurring in at least one of a running route leading to the inside of the engine drive restricted zone and a running route at the inside of the engine drive restricted zone compared to when it is judged that congestion does not occur or congestion is predicted as not occurring at both of a running route leading to the inside of the engine drive restricted zone and a running route at the inside of the engine drive restricted zone.

Next, a fifth embodiment able to be applied to a hybrid vehicle driven by both the electric motor 21 and internal combustion engine 20 will be explained. In a hybrid vehicle driven by both the electric motor 21 and internal combustion engine 20, generally speaking, at the time of low speed running, the operating mode of the vehicle is made the EV mode where only the electric motor 21 is used to drive the vehicle, while at the time of medium and high speed running, the operating mode of the vehicle is made the HV mode where both the electric motor 21 and internal combustion engine 20 are used to drive the vehicle. Therefore, if traffic congestion occurs and low speed running and stops are repeated, the vehicle 1 is run repeatedly by only the electric motor 21 and inevitably the rate of use of the electric motor 21 increases. However, if the rate of use of the electric motor 21 is high, sometimes it is difficult to make the SOC amount increase in a short time period. To reliably make the SOC amount increase in a short time period, it is preferable to lower the rate of use of the electric motor 21.

On the other hand, time is required for making the SOC amount increase when the host vehicle enters the inside of the engine drive restricted zone. Therefore, it is preferable that the larger the lower limit value SOCX to be set, that is, when the lower limit value SOCX is made SOCX2 rather than when the lower limit value SOCX is made SOCX1, the shorter the time period in which lower limit value SOCX is made to increase. In this case, the lower the rate of use of the electric motor 21 is made, the more reliably the SOC amount can be made to increase in a short time period. Therefore, in this fifth embodiment, the operating mode of the vehicle is controlled so that the larger the lower limit value SOCX to be set, that is, when the lower limit value SOCX is made SOCX2 rather than when the lower limit value SOCX is made SOCX1, the more the rate of use of the electric motor 21 falls.

That is, in this fifth embodiment, the operating mode of the vehicle is controlled so that the rate of use of the operating electric motor 21 falls more when it is judged that congestion occurs or congestion is predicted as occurring in at least one of a running route leading to the inside of the engine drive restricted zone and a running route at the inside of the engine drive restricted zone compared to when it is judged that congestion does not occur or congestion is predicted as not occurring at both of a running route leading to the inside of the engine drive restricted zone and a running route at the inside of the engine drive restricted zone. Note that, if giving a specific example of the control for lowering the rate of use of the electric motor 21, the operating mode control of the vehicle is set in advance so that when the requested drive power of the vehicle is lower than a threshold value, the operating mode of the vehicle is made the EV mode and the threshold value for this requested drive power is made smaller the larger the lower limit value SOCX is made. That is, the threshold value for this requested drive power is made smaller when the lower limit value SOCX is made SOCX2 compared with when the lower limit value SOCX is made SOCX1.

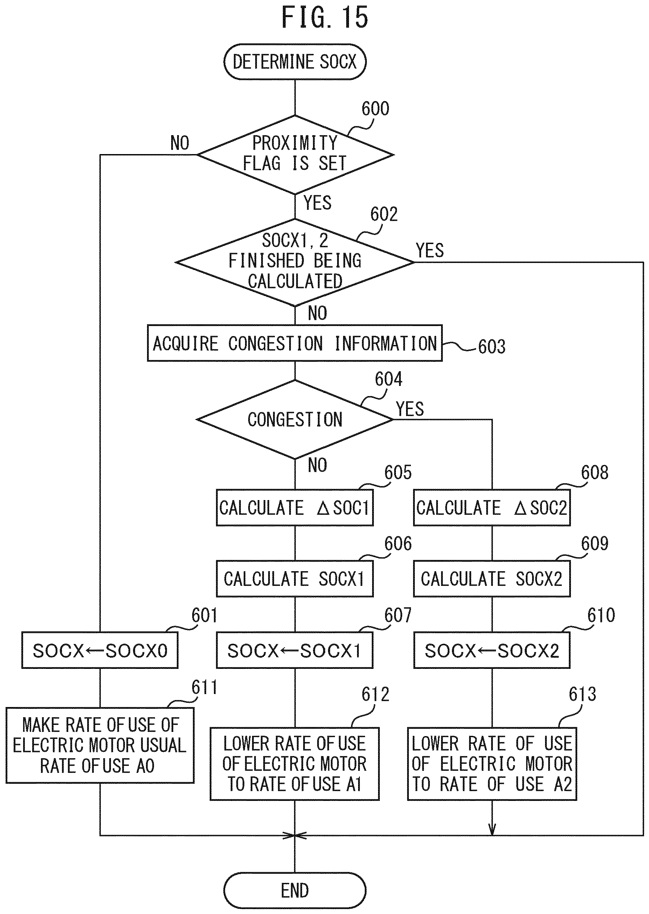

Next, the fifth embodiment of the SOCX determining processing routine shown in FIG. 15 will be explained. Note that, step 600 to step 610 of the SOCX determining processing routine shown in FIG. 15 are respectively substantially the same as step 300 to step 310 of the SOCX determining processing routine shown in FIG. 12. That is, if referring to FIG. 15, first, at step 600, it is judged if the proximity flag is set. When the proximity flag is not set, the routine proceeds to step 601 where the reference lower limit value SOCXO is made the lower limit value SOCX of the SOC amount used in the charging control routine of FIG. 4. Next, at step 611, the threshold value for the requested drive power is made the reference threshold value B0 and the rate of use of the electric motor 21 is made the usual rate of use A0. At this time, at the time of low speed running, the vehicle 1 is driven by the electric motor 21 while at the time of medium and high speed running, the vehicle 1 is driven by the internal combustion engine 20 and electric motor 21. Next, the processing cycle is ended.

As opposed to this, when at step 600 it is judged that the proximity flag is set, the routine proceeds to step 602 where it is judged if the lower limit value SOCX1 or the lower limit value SOCX2 has finished being calculated. When it is judged that the lower limit value SOCX1 or the lower limit value SOCX2 has finished being calculated, the processing cycle is ended. As opposed to this, when it is judged that the lower limit value SOCX1 or the lower limit value SOCX2 has not finished being calculated, the routine proceeds to step 603 where congestion information is acquired by the congestion information receiving device 12. Next, at step 604, it is judged if congestion occurs or congestion is predicted as occurring in at least one of a running route leading to the inside of the engine drive restricted zone and a running route at the inside of the engine drive restricted zone based on the running routes found by the navigation device 11 and the congestion information acquired by the congestion information receiving device 12.

When at step 604 it is judged that congestion does not occur or congestion is predicted as not occurring in both of a running route leading to the inside of the engine drive restricted zone and a running route at the inside of the engine drive restricted zone, the routine proceeds to step 605 where the above-mentioned method of calculation of the fallen SOC amount ΔSOC is used to calculate the SOC amount ΔSOC1 falling while the host vehicle is passing through the inside of the engine drive restricted zone when congestion does not occur at the running route of the host vehicle. Next, at step 606, for example, by adding the fallen SOC amount ΔSOC1 and a constant value "k" to the reference lower limit value SOCXO, the lower limit value SOCX1 (=reference lower limit value SOCXO+fallen SOC amount ΔSOC1+k)is calculated. Next, at step 607, the lower limit value SOCX1 calculated at step 606 is made the lower limit value SOCX of the SOC amount used in the charging control routine of FIG. 4. Next, at step 612, the threshold value for the requested drive power is made a threshold value B1 smaller than the reference threshold value B0 and the rate of use of the electric motor 21 is made a rate of use A1 smaller than the usual rate of use A0. That is, the rate of use of the electric motor 21 is lowered to the rate of use A1. Next, the processing cycle is ended.

On the other hand, when at step 604 it is judged that congestion occurs or congestion is predicted as occurring in at least one of a running route leading to the inside of the engine drive restricted zone and a running route at the inside of the engine drive restricted zone, the routine proceeds to step 608 where the above-mentioned method of calculation of the fallen SOC amount ΔSOC is used to calculate the SOC amount ΔSOC2 falling while the host vehicle is passing through the inside of the engine drive restricted zone when congestion occurs at the running route of the host vehicle. Next, at step 609, for example, by adding the fallen SOC amount ΔSOC2 and a constant value "k" to the reference lower limit value SOCXO, the lower limit value SOCX2 (=reference lower limit value SOCXO+fallen SOC amount ΔSOC2+k) is calculated. Next, at step 610, the lower limit value SOCX2 calculated at step 609 is made the lower limit value SOCX of the SOC amount used in the charging control routine of FIG. 4. Next, at step 613, the threshold value for the requested drive power is made a threshold value B2 smaller than the threshold value B1 and the rate of use of the electric motor 21 is made a rate of use A2 smaller than the rate of use A1. That is, the rate of use of the electric motor 21 is further lowered to the rate of use A2. Next, the processing cycle is ended.

In this way, in the fifth embodiment, the rate of use of the electric motor 21 is lowered when it is judged that congestion occurs or congestion is predicted as occurring in at least one of a running route leading to the inside of the engine drive restricted zone and a running route at the inside of the engine drive restricted zone compared to when it is judged that congestion does not occur or congestion is predicted as not occurring at both of a running route leading to the inside of the engine drive restricted zone and a running route at the inside of the engine drive restricted zone.

### Claims

1.    A vehicle control device of a hybrid vehicle driven by only an electric motor or by both of an electric motor and an internal combustion engine, wherein a boundary is set between an inside of an engine drive restricted zone where operation of the internal combustion engine is restricted and an outside of the engine drive restricted zone, said vehicle control device comprising:

a navigation device searching for a running route up to a destination when a destination is input,
a congestion information receiving device receiving congestion information,
an SOC amount acquiring unit acquiring an SOC amount of a battery serving as a source of supply of electric power to the electric motor,
an information acquiring unit acquiring position information of a host vehicle and information relating to said boundary,
a judging unit judging if congestion occurs or if congestion is predicted as occurring in at least one of a running route leading to the inside of the engine drive restricted zone and a running route at the inside of the engine drive restricted zone based on running routes found by the navigation device and the congestion information when it is judged based on the information acquired by the information acquiring unit that the host vehicle is positioned at the outside of the engine drive restricted zone and when it is predicted based on search results by the navigation device that the host vehicle will enter the inside of the engine drive restricted zone, and
an SOC amount control unit making an SOC amount when the host vehicle enters inside of the engine drive restricted zone increase when it is judged by the judging unit that congestion occurs or if congestion is predicted as occurring in at least one of a running route leading to the inside of the engine drive restricted zone and a running route at the inside of the engine drive restricted zone compared with when it is judged that congestion does not occur or if congestion is predicted as not occurring in both a running route leading to the inside of the engine drive restricted zone and a running route at the inside of the engine drive restricted zone.

2. The vehicle control device according to claim 1, further comprising a charging control unit controlling a charging action of the battery by the internal combustion engine if the SOC amount falls to a lower limit value set for the SOC amount,
the lower limit value being increased when it is judged by the judging unit that congestion occurs or congestion is predicted as occurring in at least one of a running route leading to the inside of the engine drive restricted zone and a running route at the inside of the engine drive restricted zone compared to when it is judged that congestion does not occur or congestion is predicted as not occurring at both of a running route leading to the inside of the engine drive restricted zone and a running route at the inside of the engine drive restricted zone.

3. The vehicle control device according to claim 2, further comprising a fallen SOC amount calculating unit calculating the SOC amount falling while the host vehicle is passing through the engine drive restricted zone along running routes found by the navigation device,
said lower limit value being calculated by using a fallen SOC amount calculated by the fallen SOC amount calculating unit.

4. The vehicle control device according to claim 1, wherein

said judging unit further judges if a time period required until the host vehicle reaches the boundary is within a preset time period or if a distance between the host vehicle and the boundary is within a preset distance when it is judged that the host vehicle is located at the outside of the engine drive restricted zone based on the information acquired by the information acquiring unit and it is predicted that the host vehicle will enter the inside of the engine drive restricted zone based on the search results of the navigation device , and
when it is judged by the judging unit that the time period required until the host vehicle reaches the boundary is within the preset time period or when it is judged that a distance between the host vehicle and the boundary is within the preset distance, it is judged by the judging unit whether congestion occurs or congestion is predicted as occurring in at least one of a running route leading to the inside of the engine drive restricted zone and a running route at the inside of the engine drive restricted zone.

5. The vehicle control device according to claim 1, further comprising a fallen SOC amount calculating unit calculating the SOC amount falling while the host vehicle is passing through the engine drive restricted zone along running routes found by the navigation device,
the SOC amount when the host vehicle enters the inside of the engine drive restricted zone being found by using a fallen SOC amount calculated by the fallen SOC amount calculating unit.

6. The vehicle control device according to claim 1, wherein when it is judged that congestion occurs or congestion is predicted as occurring in at least one of a running route leading to the inside of the engine drive restricted zone and a running route at the inside of the engine drive restricted zone, said SOC amount control unit makes an SOC amount increase processing for making the SOC amount increase when the host vehicle enters the inside of the engine drive restricted zone start earlier compared to when it is judged that congestion does not occur or congestion is predicted as not occurring at both of a running route leading to the inside of the engine drive restricted zone and a running route at the inside of the engine drive restricted zone.

7. The vehicle control device according to claim 1, wherein when it is judged that congestion occurs or congestion is predicted as occurring in at least one of a running route leading to the inside of the engine drive restricted zone and a running route at the inside of the engine drive restricted zone, the output of the internal combustion engine is raised compared to when it is judged that congestion does not occur or congestion is predicted as not occurring at both of a running route leading to the inside of the engine drive restricted zone and a running route at the inside of the engine drive restricted zone.

8. The vehicle control device according to claim 1, wherein

the vehicle is comprised of a hybrid vehicle driven by both of an electric motor and internal combustion engine, and when it is judged that congestion occurs or congestion is predicted as occurring in at least one of a running route leading to the inside of the engine drive restricted zone and a running route at the inside of the engine drive restricted zone, a rate of use of the electric motor is lowered compared to when it is judged that congestion does not occur or congestion is predicted as not occurring at both of a running route leading to the inside of the engine drive restricted zone and a running route at the inside of the engine drive restricted zone.

# FIG. 1

30

33
CPU

31

COMMUNICATION
DEVICE

36

35

I/O PORT

32

MEMORY

34

1

13 — VARIOUS SENSORS

4

6
CPU

14

COMMUNICATION
DEVICE

11 — NAVIGATION DEVICE

9 — GPS RECEIVING DEVICE

I/O PORT

3

BATTERY

10 — MAP DATA STORAGE DEVICE

8

5

MEMORY

7

2

VEHICLE
DRIVE UNIT

12 — CONGESTION INFORMATION
RECEIVING DEVICE

DRIVE WHEELS

# FIG. 2A

# FIG. 2B

# FIG. 3

# FIG. 4

```
        ( CHARGING CONTROL )
                 |
         ┌───────────────┐
         │   READ  ΔI    │────40
         └───────────────┘
                 |
         ┌───────────────────┐
         │  SOC←SOC+C·ΔI     │────41
         └───────────────────┘
                 |          42
              ╱─────────╲        NO                          44
             ╱  SOC<SOCX  ╲──────────────────        ╱───────────╲      NO
             ╲           ╱                    ╱──────╲  SOC>SOCY  ╲──────────
              ╲─────────╱                             ╲           ╱
                 | YES                                 ╲─────────╱
                 |                43                       | YES        45
         ┌───────────────────┐               ┌───────────────────────┐
         │  POWER GENERATION │               │    CANCEL POWER       │
         │     COMMAND       │               │ GENERATION COMMAND    │
         └───────────────────┘               └───────────────────────┘
                 |                                       |            46
                 |                            ┌───────────────────────┐
                 |                            │  STOP REGENERATIVE    │
                 |                            │      CONTROL          │
                 |                            └───────────────────────┘
                 |                                       |
                 |←──────────────────────────────────────
                 |
            (  END  )
```

# FIG. 5

# FIG. 6

# FIG. 7

# FIG. 8

# FIG. 9

```
                    ( VEHICLE CONTROL )
                            │
              ┌─────────────────────────────┐
              │ ACQUIRE POSITION INFORMATION │──100
              └─────────────────────────────┘
                            │
              ┌─────────────────────────────┐
              │   READ BOUNDARY INFORMATION  │──101
              └─────────────────────────────┘
                            │
                          102
                       ◇ INSIDE ◇
              ◇ ENGINE DRIVE RESTRICTED ◇────NO───────────────┐
                       ◇  ZONE  ◇                             │
                            │                                 │
                           YES                                │
              ┌─────────────────────────────┐   ┌──────────────────────────┐
              │ ENGINE OPERATION STOP COMMAND│─103│   CANCEL ENGINE         │──106
              └─────────────────────────────┘   │ OPERATION STOP COMMAND   │
                            │                    └──────────────────────────┘
              ┌─────────────────────────────┐   ┌──────────────────────────┐
              │ OPERATING CONTROL BY EV MODE │─104│  OPERATING CONTROL BY    │──107
              └─────────────────────────────┘   │    EV MODE OR HV MODE     │
                            │                    └──────────────────────────┘
                            │                                 │
                            │                               108
                            │                          ◇ INSIDE ◇
                            │                         ◇ OF ENGINE ◇
                            │        NO    ◇ DRIVE RESTRICTED ZONE ◇
                            │◄────────────◇  PREDICTED TO BE  ◇
                            │                  ◇ ENTERED ◇
                            │                            │
                            │                           YES
                            │                               109
                            │              ┌──────────────────────────────┐
                            │              │  ACQUIRE TIME PERIOD TM UNTIL  │
                            │              │      REACHING BOUNDARY         │
                            │              └──────────────────────────────┘
                            │                            │
                            │                          110
                            │            NO      ◇ TM < TMX ◇
                            │◄──────────────────◇          ◇
                            │                            │
                            │                           YES    111
                105         │              ┌──────────────────────────┐
      ┌──────────────────┐  │              │     SET PROXIMITY FLAG    │
      │ RESET PROXIMITY FLAG│              └──────────────────────────┘
      └──────────────────┘  │                            │
                            │◄───────────────────────────┘
                        ( END )
```

# FIG. 10

```
          ( VEHICLE CONTROL )
                  │
    ┌─────────────────────────────┐
    │ ACQUIRE POSITION INFORMATION │ ～100
    └─────────────────────────────┘
                  │
    ┌─────────────────────────────┐
    │   READ BOUNDARY INFORMATION  │ ～101
    └─────────────────────────────┘
                  │              102
              ◇───────────◇
             ╱   INSIDE     ╲        NO
        ◇  ENGINE DRIVE RESTRICTED  ◇────────────────────┐
             ╲     ZONE     ╱                             │
              ◇───────────◇                               │
                  │ YES                                   │
    ┌─────────────────────────────┐      ┌──────────────────────────┐
    │ ENGINE OPERATION STOP COMMAND│～103 │    CANCEL ENGINE         │～106
    └─────────────────────────────┘      │ OPERATION STOP COMMAND   │
                  │                       └──────────────────────────┘
                  │                                      │
    ┌─────────────────────────────┐      ┌──────────────────────────┐
    │ OPERATING CONTROL BY EV MODE │～104 │  OPERATING CONTROL BY    │～107
    └─────────────────────────────┘      │   EV MODE OR HV MODE     │
                  │                       └──────────────────────────┘
                  │                                      │        108
                  │                              ◇───────────────◇
                  │                             ╱    INSIDE        ╲
                  │               NO           ╱    OF ENGINE       ╲
                  │◄───────────────────────── ◇ DRIVE RESTRICTED ZONE ◇
                  │                             ╲   PREDICTED TO BE  ╱
                  │                              ╲    ENTERED       ╱
                  │                               ◇───────────────◇
                  │                                      │ YES        109a
                  │                       ┌──────────────────────────┐
                  │                       │   ACQUIRE DISTANCE CR     │
                  │                       │      UNTIL BOUNDARY       │
                  │                       └──────────────────────────┘
                  │                                      │          110a
                  │            NO                 ◇───────────────◇
                  │◄───────────────────────────── ◇    CR < CRX    ◇
                  │                                ◇───────────────◇
                  │                                      │ YES       111
    ┌─────────────────────┐              ┌──────────────────────────┐
    │ RESET PROXIMITY FLAG │105          │    SET PROXIMITY FLAG     │
    └─────────────────────┘              └──────────────────────────┘
                  │◄────────────────────────────────────┘
                  │
              (  END  )
```

# FIG. 11

```
              ( DETERMINE SOCX )
                      │
                      │          ╭─ 200
              ╱───────────────╲
    NO       ╱   PROXIMITY     ╲
  ◄─────────◄    FLAG IS SET     ►
             ╲                  ╱
              ╲───────────────╱
                      │ YES
                      │              ╭─ 202
              ╱───────────────╲
             ╱    SOCX1,2       ╲    YES
            ◄  FINISHED BEING     ►──────────────────────┐
             ╲  CALCULATED      ╱                         │
              ╲───────────────╱                           │
                      │ NO                                │
           ┌───────────────────────┐                     │
           │  CALCULATE △SOC        │──── 203             │
           └───────────────────────┘                     │
                      │                                   │
           ┌───────────────────────┐                     │
           │  CALCULATE SOCX1       │──── 204             │
           └───────────────────────┘                     │
                      │                                   │
      ┌─────────────────────────────────────┐            │
      │  ACQUIRE CONGESTION INFORMATION      │──── 205    │
      └─────────────────────────────────────┘            │
                      │                                   │
                      │          ╭─ 206                   │
              ╱───────────────╲                           │
             ╱                 ╲   YES                    │
            ◄    CONGESTION       ►────────┐              │
             ╲                 ╱           │              │
              ╲───────────────╱            │              │
                      │ NO                 │    ╭─ 208     │
                      │      ┌──────────────────────────┐ │
                      │      │  SOCX2←SOCX1+α            │ │
                      │      └──────────────────────────┘ │
                      │                    │              │
  ╭─ 201              │      ╭─ 207         │   ╭─ 209     │
┌─────────────┐  ┌─────────────────┐  ┌──────────────────┐│
│ SOCX←SOCX0  │  │  SOCX←SOCX1     │  │  SOCX←SOCX2      ││
└─────────────┘  └─────────────────┘  └──────────────────┘│
      │                │      ╳            │              │
      └────────────────┴──────┼───────────┴──────────────┘
                              │
                      ( END )
```

# FIG. 12

```
          ( DETERMINE SOCX )
                  │
                  │           300
         ┌────────┴────────┐
 NO      │   PROXIMITY     │
◄────────┤   FLAG IS SET   │
         └────────┬────────┘
                  │ YES        302
          ┌───────┴───────┐
          │   SOCX1, 2     │     YES
          │ FINISHED BEING ├──────────────────────┐
          │  CALCULATED    │                       │
          └───────┬───────┘                        │
                  │ NO                              │
      ┌───────────┴─────────────────┐              │
      │ ACQUIRE CONGESTION INFORMATION│──303        │
      └───────────┬─────────────────┘              │
                  │              304               │
          ┌───────┴───────┐                        │
          │  CONGESTION    │     YES                │
          │                ├──────────┐            │
          └───────┬───────┘           │            │
                  │ NO     305        │     308    │
          ┌───────┴───────┐   ┌───────┴───────┐    │
          │ CALCULATE ΔSOC1│   │ CALCULATE ΔSOC2│   │
          └───────┬───────┘   └───────┬───────┘    │
                  │        306        │     309    │
          ┌───────┴───────┐   ┌───────┴───────┐    │
          │ CALCULATE SOCX1│   │ CALCULATE SOCX2│   │
          └───────┬───────┘   └───────┬───────┘    │
  301             │        307        │     310    │
┌──────────────┐ ┌──────────────┐ ┌──────────────┐ │
│ SOCX←SOCX0   │ │ SOCX←SOCX1   │ │ SOCX←SOCX2   │ │
└──────┬───────┘ └──────┬───────┘ └──────┬───────┘ │
       │                │                │         │
       └────────────────┼────────────────┘─────────┘
                        │
                   (  END  )
```

# FIG. 13

# FIG. 14

```
          ( DETERMINE SOCX )
                  │
                  ▼                    500
         ┌──────────────────┐
   NO    │    PROXIMITY      │
 ◄───────│   FLAG IS SET     │
         └──────────────────┘
                  │ YES         502
                  ▼
         ┌──────────────────┐
         │    SOCX1,2        │    YES
         │ FINISHED BEING    │─────────────────────────►
         │  CALCULATED       │
         └──────────────────┘
                  │ NO
                  ▼
    ┌─────────────────────────────┐
    │ ACQUIRE CONGESTION INFORMATION │───503
    └─────────────────────────────┘
                  │
                  ▼              504
         ┌──────────────────┐
         │                  │   YES
         │   CONGESTION     │──────────────────┐
         │                  │                  │
         └──────────────────┘                  │
                  │ NO                          │
           505    ▼                      508    ▼
        ┌────────────────┐           ┌────────────────┐
        │ CALCULATE ΔSOC1 │           │ CALCULATE ΔSOC2 │
        └────────────────┘           └────────────────┘
           506    │                      509    │
        ┌────────────────┐           ┌────────────────┐
        │ CALCULATE SOCX1 │           │ CALCULATE SOCX2 │
        └────────────────┘           └────────────────┘
   501    │             507    │         510    │
┌──────────────┐  ┌──────────────┐  ┌──────────────┐
│ SOCX←SOCX0   │  │ SOCX←SOCX1   │  │ SOCX←SOCX2   │
└──────────────┘  └──────────────┘  └──────────────┘
                     511    │           512    │
              ┌────────────────────┐ ┌────────────────────┐
              │ INCREASE OUTPUT ΔP1 │ │ INCREASE OUTPUT ΔP2 │
              └────────────────────┘ └────────────────────┘
                         │                    │
                         ▼                    ▼
                  ( END )
```

# FIG. 15

```
        ( DETERMINE SOCX )
                |
                |  600
         ╱ PROXIMITY ╲
  NO ───╱  FLAG IS SET ╲
        ╲             ╱
         ╲          ╱
             | YES
             |         602
         ╱ SOCX1, 2   ╲
        ╱ FINISHED BEING╲─── YES
        ╲ CALCULATED   ╱
         ╲            ╱
             | NO
   ┌──────────────────────────────┐
   │ ACQUIRE CONGESTION INFORMATION │─── 603
   └──────────────────────────────┘
                |
                |        604
          ╱ CONGESTION ╲─── YES
          ╲            ╱
             | NO
        605                      608
 ┌─────────────────┐    ┌─────────────────┐
 │ CALCULATE △SOC1 │    │ CALCULATE △SOC2 │
 └─────────────────┘    └─────────────────┘
        606                      609
 ┌─────────────────┐    ┌─────────────────┐
 │ CALCULATE SOCX1 │    │ CALCULATE SOCX2 │
 └─────────────────┘    └─────────────────┘

   601              607                      610
┌────────────┐ ┌────────────┐    ┌────────────┐
│ SOCX←SOCX0 │ │ SOCX←SOCX1 │    │ SOCX←SOCX2 │
└────────────┘ └────────────┘    └────────────┘

     611              612                      613
┌──────────────┐ ┌──────────────┐ ┌──────────────┐
│ MAKE RATE OF USE OF │ │ LOWER RATE OF USE │ │ LOWER RATE OF USE │
│ ELECTRIC MOTOR USUAL │ │ OF ELECTRIC MOTOR │ │ OF ELECTRIC MOTOR │
│ RATE OF USE A0 │ │ TO RATE OF USE A1 │ │ TO RATE OF USE A2 │
└──────────────┘ └──────────────┘ └──────────────┘

              ( END )
```

Europäisches
Patentamt

European
Patent Office

Office européen
des brevets

# EUROPEAN SEARCH REPORT

Application Number

EP 21 20 4771

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
| X | US 2018/134274 A1 (OGAWA YUKI [JP]) 17 May 2018 (2018-05-17) * abstract; figures 1-6 * * paragraph [0006] – paragraph [0016] * ----- | 1-8 | INV. B60W10/06 B60W10/08 B60W20/12 B60W20/13 |
| A | US 2011/071712 A1 (MIZUNO YUUSUKE [JP] ET AL) 24 March 2011 (2011-03-24) * the whole document * ----- | 1-8 | B60W10/26 B60W60/00 |
| A | EP 3 012 166 A1 (AISIN AW CO [JP]; TOYOTA MOTOR CO LTD [JP]) 27 April 2016 (2016-04-27) * the whole document * ----- | 1-8 | |
| A | US 2017/144650 A1 (NAGAMIYA KIYOMI [JP] ET AL) 25 May 2017 (2017-05-25) * the whole document * ----- | 1-8 | |

TECHNICAL FIELDS
SEARCHED      (IPC)

B60W

The present search report has been drawn up for all claims

| Place of search | Date of completion of the search | Examiner |
|---|---|---|
| Munich | 17 December 2021 | Moroncini, Alessio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 4771

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2021

| Patent document cited in search report | | Publication date | Patent family member(s) | | Publication date |
|---|---|---|---|---|---|
| US 2018134274 | A1 | 17-05-2018 | CN | 108082176 A | 29-05-2018 |
| | | | JP | 2018079728 A | 24-05-2018 |
| | | | US | 2018134274 A1 | 17-05-2018 |
| US 2011071712 | A1 | 24-03-2011 | JP | 2011063186 A | 31-03-2011 |
| | | | US | 2011071712 A1 | 24-03-2011 |
| EP 3012166 | A1 | 27-04-2016 | CN | 105492866 A | 13-04-2016 |
| | | | EP | 3012166 A1 | 27-04-2016 |
| | | | JP | 5989622 B2 | 07-09-2016 |
| | | | JP | 2015068756 A | 13-04-2015 |
| | | | US | 2016229389 A1 | 11-08-2016 |
| | | | WO | 2015045514 A1 | 02-04-2015 |
| US 2017144650 | A1 | 25-05-2017 | DE | 102016122254 A1 | 24-05-2017 |
| | | | JP | 6269641 B2 | 31-01-2018 |
| | | | JP | 2017094789 A | 01-06-2017 |
| | | | US | 2017144650 A1 | 25-05-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7075210 A